Europäisches Patentamt

European Patent Office

Office européen des brevets

(19)

(11) **EP 1 403 329 A1**

(12) **EUROPEAN PATENT APPLICATION**

(43) Date of publication:
**31.03.2004 Bulletin 2004/14**

(21) Application number: **03021830.9**

(22) Date of filing: **26.09.2003**

(51) Int Cl.[7]: **C09C 3/06**, C09C 1/04,
C09C 1/02, C09C 1/36,
C09C 1/40, C09C 1/46,
C09K 11/02

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **27.09.2002 JP 2002284572
27.09.2002 JP 2002284578**

(71) Applicant: **Fuji Photo Film Co., Ltd.
Kanagawa 250-0123 (JP)**

(72) Inventors:
• **Hubacek, Milan
Ashigara-kami-gun, Kanagawa 258-8538 (JP)**
• **Takahashi, Kenji
Ashigara-kami-gun, Kanagawa 258-8538 (JP)**

(74) Representative: **Klunker . Schmitt-Nilson . Hirsch
Winzererstrasse 106
80797 München (DE)**

(54) **Method for coating particles**

(57)    A method for coating inorganic particles with a metal compound is performed by the steps of: preparing a dispersion which comprises a metal salt and inorganic particles in a molten organic material which takes a solid form at 25°C, is converted into a polar liquid by heating and decomposes by further heating; and heating the dispersion, whereby coating the inorganic particles with a metal compound which is converted from the metal salt.

EP 1 403 329 A1

**Description**

FIELD OF THE INVENTION

The present invention relates to a method for coating particles with a metal compound.

BACKGROUND OF THE INVENTION

It is known that chemically or physically instable particles are coated with a metal compound, for example, by a sol-gel procedure, a chemical vapor deposition (CVD) procedure, or a spray pyrolysis procedure.

According to the sol-gel procedure, particles are dispersed in a hydroxide sol which is produced by hydrolyzing a metal salt or a metal alkoxide; the hydroxide sol containing the particles are dehydrated to give a gel containing the particles; and the gel containing the particles is heated to dryness and further heated until the gel decomposes. Thus, particles coated with a metal oxide is obtained. The sol-gel procedure, however, has a problem in that it cannot form a metal oxide coat of a satisfactory thickness.

CVD procedure also has a problem in that preparation of an apparatus for performing the CVD procedure requires a large cost and therefore the cost for preparing the coated particles is high.

JP-A-2002-180041 describes phosphor particles comprising cores of non-phosphorous inorganic material coated with a phosphor material. This publication discloses a process for coating the inorganic material cores with a phosphor material by preparing a mixture of the core particles and a starting material of the phosphor material in a solid phase and firing the mixture, or by mixing an aqueous dispersion of the core particles with an aqueous solution of a starting material of the phosphor material, adding a precipitating agent to the resulting mixture to coat the core particles with a phosphor precursor, and drying and firing the coated core particles.

W095/29379 describes a process for preparing a complex oxide (its precursor or crystal) which comprises the steps of preparing a mixture of a metal nitrate or its solution with urea or carbohydrazide and heating the mixture under non-firing conditions to give a complex oxide precursor, and then firing the complex oxide precursor. According to this process, a metal nitrate and urea are heated to give a uniform molten mixture and the mixture then decomposes by further heating to give the complex oxide.

Accordingly, it is an object of the present invention to provide a new method for coating particles with a metal compound.

Specifically, the object of the invention is to provide a method for preparing particles coated with a metal compound of a large thickness at a low cost.

SUMMARY OF THE INVENTION

The inventors of the present invention have discovered that inorganic core particles can be coated with a metal compound (e.g., a metal oxide) by the steps of preparing a dispersion of the core particles in a molten organic material (which takes a solid form at 25°C, is converted into a polar liquid by heating, and decomposes by further heating, e.g., urea or carbohydrazide) containing a metal salt (e.g., a metal nitrate), and heating the dispersion to decompose the organic material.

The inventors further have discovered that inorganic core particles can be coated with a metal compound (e.g., a metal oxide) by the steps of preparing a mixture of a metal salt and the organic material, heating the mixture to produce a metal compound precursor (which is converted from the metal salt) dispersed in a modified organic material, mixing the core particles with the metal compound precursor dispersed in the denatured organic material, and heating the resulting mixture to decompose the denatured organic material.

Accordingly, from the first aspect, the present invention resides in a first method for coating inorganic particles with a metal compound comprising the steps of:

preparing a dispersion which comprises a metal salt and inorganic particles in a molten organic material which takes a solid form at 25°C, is converted into a polar liquid by heating, and decomposes by further heating; and
heating the dispersion, whereby coating the inorganic particles with a metal compound which is converted from the metal salt.

According to the first method of the invention, the desired coated particles having a thick metal oxide coating layer can be easily prepared.

Further, from the second aspect, the invention resides in a second method for coating inorganic particles with a metal compound comprising the steps of:

preparing a first mixture which comprises a metal salt and an organic material which takes a solid form at 25°C, is converted into a polar liquid by heating, and decomposes by further heating;

heating the first mixture to produce a precursor of the metal compound dispersed in a denatured organic mate-'rial, the precursor being converted from the metal salt;

preparing a second mixture of the inorganic particles and the precursor dispersed in the denatured organic material; and

heating the second mixture, whereby coating the inorganic particles with a metal compound which is converted from the precursor.

According to the second method of the invention, inorganic core particles (e.g., $SiO_2$ particles) which may be soluble in the employed molten organic material can be easily coated with a thick metal oxide coating layer. Further, the second method can effectively keep ammonia-sensitive core particles (e.g. , $BaTiO_3$ particles) from a reaction with ammonia produced from the molten organic material such as urea. Further, particles comprising a silicate can be produced from core particles comprising $SiO_2$ and a shell material comprising a metal oxide.

Furthermore, the invention resides in the coated inorganic particles prepared by the above-mentioned methods of the invention.

The first and second methods of the invention are favorably employable for preparing a coated inorganic particle in which one of the core inorganic particle and the coated layer is made of a phosphor material and another is made of a dielectric material or an electroconductive material. Thus coated inorganic particle containing a phosphor material is favorably employed for manufacturing an electroluminescence (EL) display element, a field emission display (FED) element, and a plasma display panel (PDP) which utilize phosphor particles.

BRIEF DESCRIPTION OF DRAWINGS

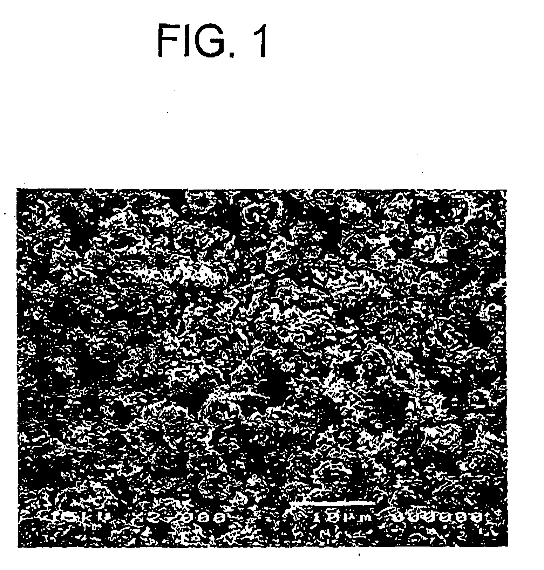

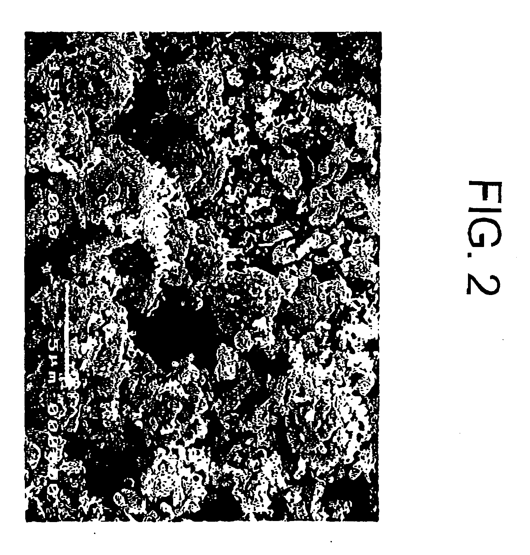

Each Of Figs. 1 and 2 is an electron micrograph (x 2,000 for Fig. 1, and x5,000 for Fig. 2) of coated particles (core material: $ZnS:Mn^{2+}$, metal compound coat: $Y_2O_3$) prepared by the first method of the invention in which the heating procedure was carried out by increasing the temperature at a rate of 5°C/min. up to 450°C.

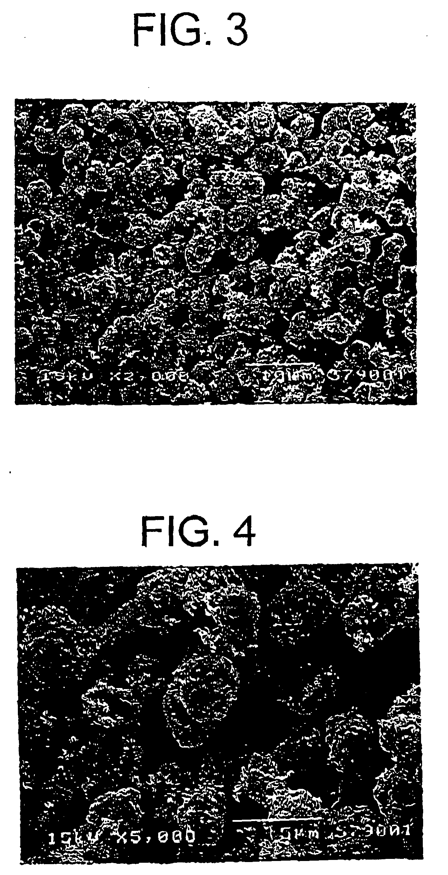

Each of Figs. 3 and 4 is an electron micrograph (x 2,000 for Fig. 3, and x5,000 for Fig. 4) of coated particles (core material: $ZnS:Mn^{2+}$, metal compound coat: $Y_2O_3$) prepared by the first method of the invention in which the heating procedure was carried out by increasing the temperature at a rate of 1°C/min. up to 450°C.

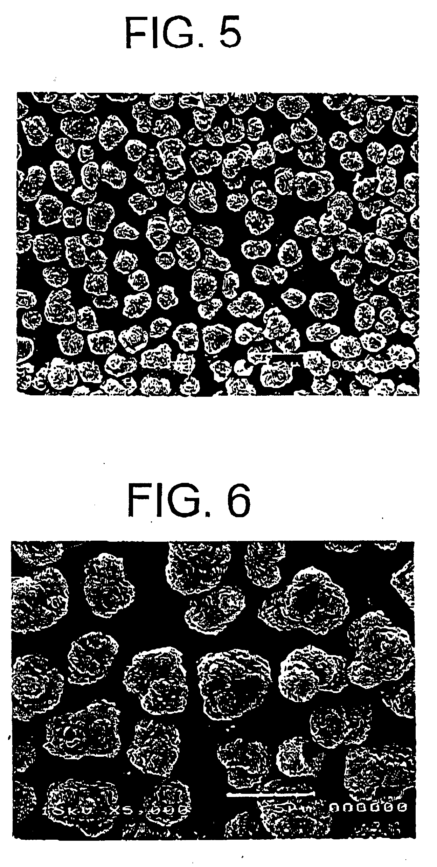

Each of Figs. 5 and 6 is an electron micrograph (x 2,000 for Fig. 5, and x5,000 for Fig. 6) of the core particles (core material: $ZnS:Mn^{2+}$, CRT grade) having no coat.

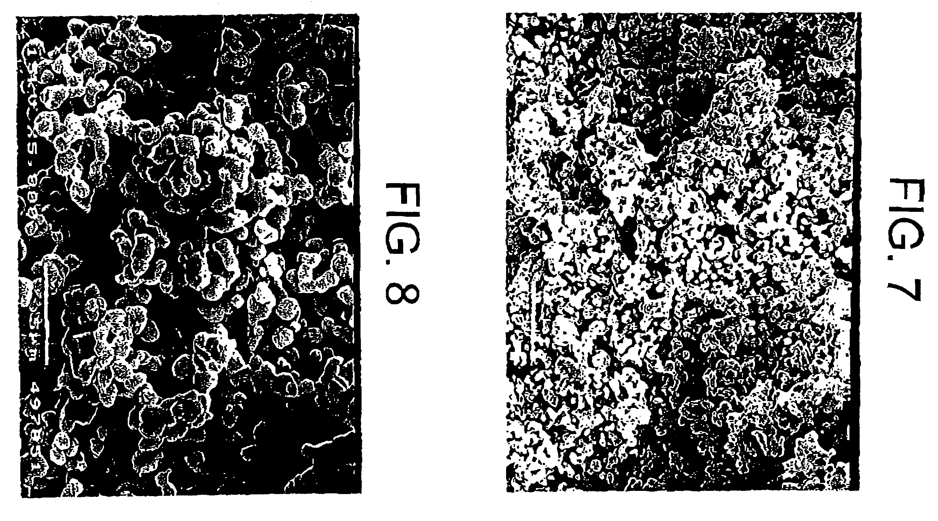

Each of Figs. 7 and 8 is an electron micrograph (x 2,000 for Fig. 7, and x5,000 for Fig. 8) of core particles (core material: $ZnS:Mn^{2+}$) having no coat which were treated by dispersing in molten urea, heating and firing.

Fig. 9 is a fluorescence spectrum of coated particles (core material: $ZnS:Mn^{2+}$ phosphor, coat material: $Y_2O_3$ dielectric material) which was prepared from core particles of $ZnS:Mn^{2+}$ phosphor and yttrium nitrate (for the formation of the metal compound coat).

Fig. 10 is a fluorescence spectrum of coated particles which were prepared from core particles of ZnS, yttrium nitrate, and a dopant of manganese acetate.

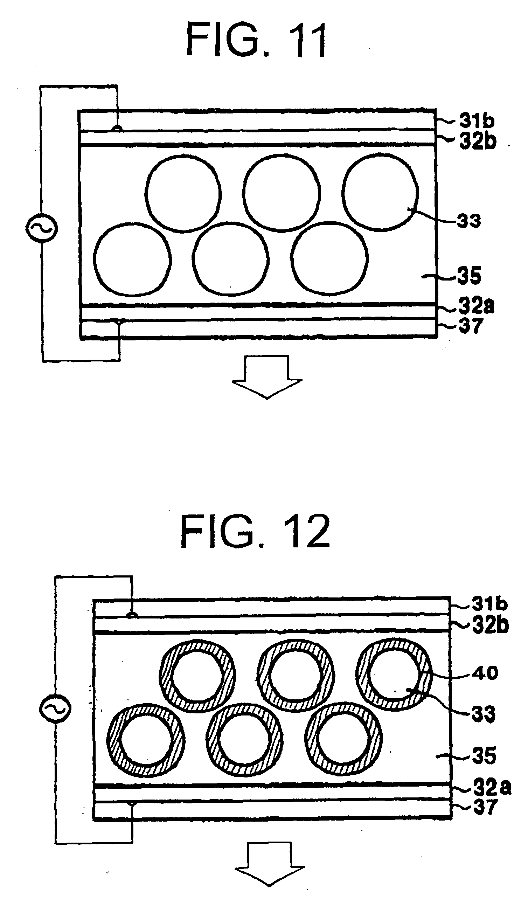

Each of Figs. 11 to 22 is a schematic section indicating a constitution of the dispersion EL device according to the invention.

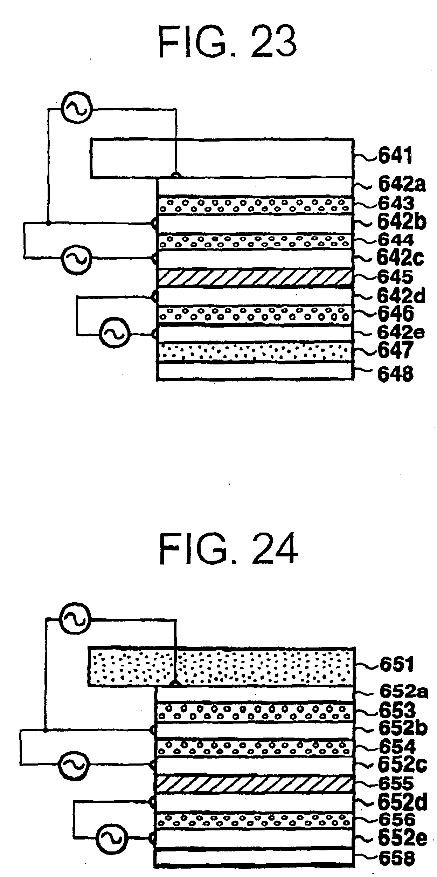

Each of Fig. 23 and Fig. 24 is a schematic section indicating a constitution of the multi-color displaying dispersion EL device according to the invention.

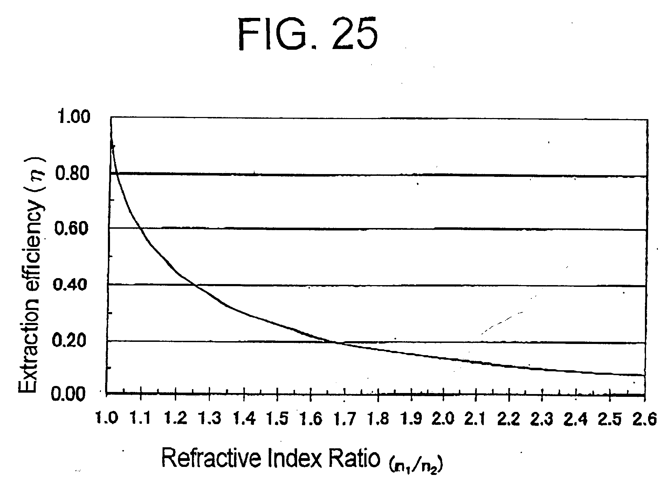

Fig. 25 is a graph indicating a light-extraction efficiency from a parallel plane.

DETAILED DESCRIPTION OF THE INVENTION

In the method of the present invention, the preferred embodiments are described below.

(1) The organic material is urea and/or carbohydrazide.
(2) The metal salt is selected from the group consisting of metal nitrates, metal sulfates, and metal acetates.
(3) The inorganic particles have a mean particle size in the range of 10 nm to 100 μm.
(4) The inorganic particles comprise an inorganic phosphor or an activated inorganic phosphor.
(5) The inorganic particles comprises a dielectric material or an electroconductive material.
(6) The metal compound is a phosphor or an activated phosphor.
(7) The inorganic particles comprises an inorganic dielectric material and the metal compound is a phosphor or an activated phosphor.
(8) The inorganic particles comprise a dielectric material and are coated with a phosphor or an activated phosphor and the outer metal compound is a dielectric material.

(9) The metal compound is selected from the group consisting of metal oxides, metal nitrides, metal oxynitrides, metal sulfides, and/or metal oxysulfides.

(10) The dispersion of the first method contains a dopant.

(11) The heating of the second step of the first method or the second step of the second method is performed at a temperature of 150 to 450°C.

(12) The heating of the second step of the first method or the fourth step of the second method is performed at a temperature of 150 to 1,500°C.

(13) The heating of the second step of the first method or the fourth step of the second method is continued until the organic material decomposes.

(14) The heating of the second step of the first method or the fourth step of the second method is continued until the organic material decomposes and further continued to a temperature of 700 to 1,500°C.

(15) The first mixture of the second method contains a dopant, or the dopant is incorporated into the second mixture of the second method.

(16) The metal compound coated around the inorganic particles has a thickness in the range of 1 nm to 10 $\mu$m.

In the first place, the first coating method of the invention is described below by referring to the case in which urea is employed as the organic material.

[Preparation of dispersion]

First, molten urea in which a metal salt is dissolved is prepared, and the inorganic particles are dispersed in the molten urea containing the metal salt.

The material of the inorganic particles employed in the first method is selected from inorganic materials that are not soluble in the molten urea and do not react with urea in the heating steps. Examples of the inorganic materials include $Al_2O_3$, $ZnO$, $Y_2O_3$, $In_2O_3$, $SnO_2$, $HfO_2$, $Ln_2O_3$ (Ln is a rare earth element), $Ta_2O_5$, $CaAl_2O_4$, $CaWO_4$, $SrAl_2O_4$, $SrTiO_3$, $BaTiO_3$, $ZnGa_2O_4$, $YAG(Y_3Al_5O_{12})$, $ALON$, $YVO_4$, $YTaO_4$, $Zn_2SiO_4$, $BaAl_{12}O_{19}$, $BaMgAl_{10}O_{17}$, $BaMg_2Al_{14}O_{24}$, $BaTa_2O_6$, $SrAl_2O_4$, $Sr_4Al_{14}O_{25}$, $Sr_2MgSi_2O_7$, $Bi_4Ge_3O_{12}$, $Gd_2SiO_5$, $Zn_3(PO_4)_2$, $LaPO_4$, $(Y,Gd)BO_3$, $InBO_3$, $ZnS$, $CaS$, $SrS$, $MoS_2$, $WS_2$, $CaGa_2S_4$, $SrGa_2S_4$, $BaAl_2S_4$, $Gd_2O_2S$, $AlN$, $Si_3N_4$, $GaN$, $InN$, $GaSiN_2$, $Eu_2Si_5N_8$, $BaAl_{11}O_{16}N$, $CsI$, $BaFBr$, $LaOBr$, $Ca_5(PO_4)_3Cl$, and graphite. These materials can contain a small amount of a metal ion or metal ions which can serve as activator(s).

The inorganic particles can be phosphor particles, dielectric material particles, electroconductive material particles, or particles of material which shows a high absorption for radiation such as X rays or electron rays. An activated phosphor particles can be prepared by employing particles of matrix component, placing a dopant (activator) in the molten urea, and incorporating the dopant into the particles of matrix component in the course of placing a coating layer around the particles. The core particles can comprise particles of the same size and/or same material. Otherwise, the core particles can comprise two or more kinds of particles of different sizes and/or different materials.

The molten urea effectively disturbs agglomeration of fine inorganic particles. Accordingly, the inorganic particles can have an optional shape, size, and particle distribution. For example, the inorganic particles can be globular particles, plates, cubic particles, polyhedral particles, or pulverized inorganic particles having irregular shapes. The inorganic particles generally have a mean particle size in the range of 10 nm to 100 $\mu$m, preferably 30 nm to 30 $\mu$m.

The metal salt which is the starting compound of the metal compound coating layer is selected from metal salts which do not react with urea and material of the inorganic particles, and the resulting metal compound is easily placed on the surfaces of the inorganic particles.

Examples of the metal components include alkali metals (e.g., Li, Na, K), alkaline earth metals (e.g., Mg, Ca, Sr, Ba), B, Al, Si, Sc, Ti, Cr, Fe, Co, Ni, Cu, Zn, Ga, Y, Zr, Nb, Ag, Cd, In, Sn, Hg, Pb, and rare earth elements (e.g., Ce, Pr, Eu, Gd, Dy, Ho, Er, Tm, Yb, Lu).

Examples of the metal salts include nitrates, sulfates and acetates. Preferred are nitrates and acetates, and more preferred are nitrates . If the metal is boron, it can be used in the form of a boric acid. The metal and metal salt can be employed singly or in combination.

The urea and metal salt are placed in a reaction vessel such as a separable flask and heated to a temperature higher than the melting point of urea (135°C) so as to produce a molten urea containing the metal salt. Since the molten urea is a polar liquid, the metal salt is soluble in the molten urea. If carbohydrazide is employed in place of urea, carbohydrazide and metal salt are heated to a temperature higher than the melting point of carbohydrazide (152°C). The urea and metal salt can be utilized in an optional ratio depending on the nature and. amount of the core particles, a coating amount, and nature of the metal (such as coordination valency of the metal). However, a molar ratio of urea/metal salt preferably is 1/1 or more so that a uniform molten urea can be smoothly obtained.

A small amount of an additive such as a dopant can be incorporated into the molten urea. The dopant can be an ion of Mn, Cu, Zn, Al, Tl, or a rare earth element (e.g., Ce, Pr, Nd, Eu, Gd, Tb, Eu, Tm). The metal ion dopant can be incorporated into the molten area in the form of a nitrate, a sulfate or an acetate. The dopant is incorporated into the coating metal compound or the inorganic core particles in the following heating step and activates the material contained in the coating layer and the core particles. If the core material or the coating compound is a phosphor matrix component, the dopant activates the matrix component.

The molten urea can contain a small amount of an organic additive such as saccharose, so that the coating material (metal compound) in the molten urea can easily adhere to the surface of the core particle and form a well formed coat on the core particle.

In the molten urea, the inorganic core particles are placed and dispersed uniformly. The amount of the core particles can be optionally selected. A molar ratio of the core particles/metal salt generally is in the range of $10^6/1$ to $1/10$.

The inorganic core particles can be placed in the preparation of a mixture of urea and a metal salt. Otherwise, the metal salt and inorganic core particles can be incorporated into molten urea.

The organic material can be other than urea and carbohydrazide, so long as the organic material takes a solid form at 25°C, is converted into a polar liquid by heating, and decomposes by further heating. For example, other urea derivatives can be employed.

[Heating step]

A dispersion of inorganic core particles in the molten urea containing a metal salt is then heated to a temperature higher than the melting point of urea but lower than the temperature at which the resulting metal compound sinters.

The heating temperature generally is in the range of 150 to 450°C. The heating period generally is in the range of 10 min. to 24 hrs. The temperature can be kept constant or gradually increased during the heating step. The heating procedure can be performed under oxidative atmosphere (such as atmospheric condition), neutral atmosphere (such as in $N_2$ gas or Ar gas), or vacuum condition.

In the heating step, a part or whole of the molten urea decomposes to give a combustible gas which escapes from the reaction mixture, and the metal salt also decomposes to give a metal compound such as oxide, nitride, oxynitride, sulfide, or oxysulfide which is coated around the dispersed core particles.

The heating step can be performed in the range of 150 to 1,500°C. If the heating is performed at a higher temperature, decomposed materials other than the metal compound easily escapes from the reaction mixture and the metal compound deposited on the core particle easily crystallizes.

The surface-coated core particles obtained in the heating step can be pulverized, dispersed, and/or sieved, if necessary.

Thus, inorganic particles coated with a metal compound such as oxide, nitride, oxynitride, sulfide, or oxysulfide are obtained. The coated metal compound may be an amorphous compound, a partly crystallized compound, or a fully crystallized compound depending on the heating condition. The particles coated with the amorphous compound or partly crystallized compound may be coated precursor particles which further can be heated to give a fully crystallized coating compound.

[Firing step]

The inorganic particles coated with a metal compound which are obtained in the above-mentioned heating step are preferably further heated for firing, by the following procedures.

The coated particles are placed in a heat-resistant vessel such as quartz boat, alumina crucible, or quartz crucible and fired in an electric furnace. The firing is performed generally at a temperature of 700 to 1,500°C, preferably 700 to 1,300°C. The firing temperature may vary depending on the nature of the coated particles. The heating period generally is in the range of 10 min. to 100 hrs. The heating period may vary depending on the firing conditions and the nature of the coating compound. If the metal compound is a metal oxide, the firing is performed under reductive condition which is formed of inert gas containing a small amount of hydrogen (e.g., $N_2/H_2$, $NH_3$ gas), neutral condition such as inert gas condition (e.g., He, Ne, Ar, N,), oxidative condition which is formed of inert gas containing a small amount of oxygen (e.g. , $N_2/O_2$), or vacuum condition. If the metal compound is a metal nitride or oxynitride, the firing is performed under neutral condition, reductive condition, or vacuum condition. The firing procedure can be repeated under different firing conditions. The firing procedure can be performed following the above-mentioned heating procedure.

The fired surface-coated core particles obtained in the firing step can be pulverized, dispersed, and/or sieved, if necessary.

The firing procedure performed for the surface-coated core particles is effective to completely remove decomposition products from the metal compound coat and to completely crystallize the metal compound coat. Accordingly, if the metal compound coat is a phosphor material coat, the firing procedure is favorably employed.

If the dopant is placed in the molten urea, the dopant such as a metal ion is incorporated and dispersed in the metal compound coat or core particles, so that the metal compound coat or core particles can be activated (for instance, a phosphor is activated).

The metal compound is generally coated around the core particles with a thickness of generally 1 nm to 10 μm, preferably 10 nm to 5 μm.

The second method of the invention can be performed in the following manner.

[Preparation of molten urea]

In the same manner as in the corresponding procedure of the first method, urea and the metal salt are placed in a reaction vessel and heated to a temperature higher than the melting point of the urea to give molten urea in which the metal salt is dissolved. In the molten urea, a small amount of an additive such as a dopant can be incorporated so as to activate the coating material.

[Heating step]

The molten urea containing the metal salt is then heated to a temperature higher than the melting point of urea but lower than the temperature at which the resulting metal compound sinters.

The heating temperature generally is in the range of 150 to 450°C. The heating period generally is in the range of 10 min. to 24 hrs. The temperature can be kept constant or gradually increased during the heating step. The heating procedure can be performed under oxidative atmosphere (such as atmospheric condition), neutral atmosphere (such as in $N_2$ gas or Ar gas), or vacuum condition.

In the heating step, a part of the molten urea decomposes but a remaining part is turned into a polymer material, and the metal salt also decomposes to give a metal compound such as oxide, nitride, oxynitride, sulfide, or oxysulfide.

After the heated mixture is cooled, a solid product comprising the metal compound dispersed in the polymer material is obtained. The solid product is then pulverized to give a powder in which each particle comprises a metal compound (or metal ion) uniformly dispersed in a polymerized urea matrix. This powder is named a metal compound precursor.

[Mixing the metal compound precursor with core particles]

The metal compound precursor obtained in the above-mentioned step is then mixed with the inorganic core particles. The core particles are mixed with the metal compound precursor in a molar ratio of $10^6$:1 to 1:10 (former/ latter), while the ratio may vary depending on the natures of the core particles and precursor and the desired coating amount. The mixing can be performed for 10 min. to 24 hrs., by a dry procedure in a ball mill or other known mixing means. In the mixing procedure, a small amount of an additive such as a dopant can be incorporated into the mixture for activating the core particles or the metal compound coat. Further, a small amount of an organic additive such as saccharose can be incorporated into the mixture for placing the metal compound coat firmly on the core particles.

[Firing step]

In the second method, the mixture obtained in the above-mentioned step is fired in the same manner in the first method so that the metal compound coat is placed on the core particles. The resulting coated particles obtained in the firing procedure can be pulverized, dispersed, and/or sieved, if necessary.

In the methods for coating the inorganic core particles with a metal compound according to the present invention, the molten organic material such as molten urea or molten carbohydrazide which is employed as the medium for dissolving the metal salt and dispersing the core particles effectively disturbs agglomeration of the core particles when it is in the molten state and in the solid state after it is cooled. Accordingly, the core particles are coated uniformly with the resulting metal compound coat with a large thickness under well dispersed conditions. The coating methods of the invention are applicable for coating inorganic core particles having optionally selected particle size and comprising optionally selected material. For instance, the coating methods of the invention are favorably employed for preparing coated particles in which the coat or core particle comprises a phosphor material. The coating methods give no adverse effect to the characteristics of the prepared phosphor-containing particles.

Further, according to the coating methods of the invention, an activator can be incorporated uniformly into the metal compound coat or the core particle in the coating procedure.

The coating methods of the invention can be employed for coating inorganic core particles having a preliminary coat further with a metal compound. The inorganic core particles having a preliminary coat can be prepared by the coating method of the invention or by the known coating method such as the sol-gel method.

The inorganic particles coated by the method of the invention are explained below by referring to the attached drawings.

Each of Figs. 1 and 2 is an electron micrograph (x 2,000 for Fig. 1, and x5,000 for Fig. 2) of coated particles (core material: ZnS:Mn$^{2+}$, metal compound coat: Y$_2$O$_3$) prepared by the first method of the invention in which the heating procedure was carried out by increasing the temperature at a rate of 5°C/min. up to 450°C.

Each of Figs. 3 and 4 is an electron micrograph (x 2,000 for Fig. 3, and x5, 000 for Fig. 4) of coated particles (core material: ZnS:Mn$^{2+}$, metal compound coat: Y$_2$O$_3$) prepared by the first method of the invention in which the heating procedure was carried out by increasing the temperature at a rate of 1°C/min. up to 450°C.

Each of Figs. 5 and 6 is an electron micrograph (x 2,000 for Fig. 5, and x5,000 for Fig. 6) of the core particles (core material: ZnS:Mn$^{2+}$, CRT grade) having no coat.

Each of Figs. 7 and 8 is an electron micrograph (x 2,000 for Fig. 7, and x5,000 for Fig. 8) of core particles (core material: ZnS:Mn$^{2+}$) having no coat which were treated by dispersing in molten urea, heating and firing.

From Figs. 1 to 8, it is apparent that the coating method of the invention gives inorganic core particles (ZnS: Mn$^{2+}$) uniformly coated with a metal compound (Y$_2$O$_3$). Particularly, if the heating procedure is performed by increasing the temperature at a slow increase rate, the well dispersed coated powdery product can be prepared.

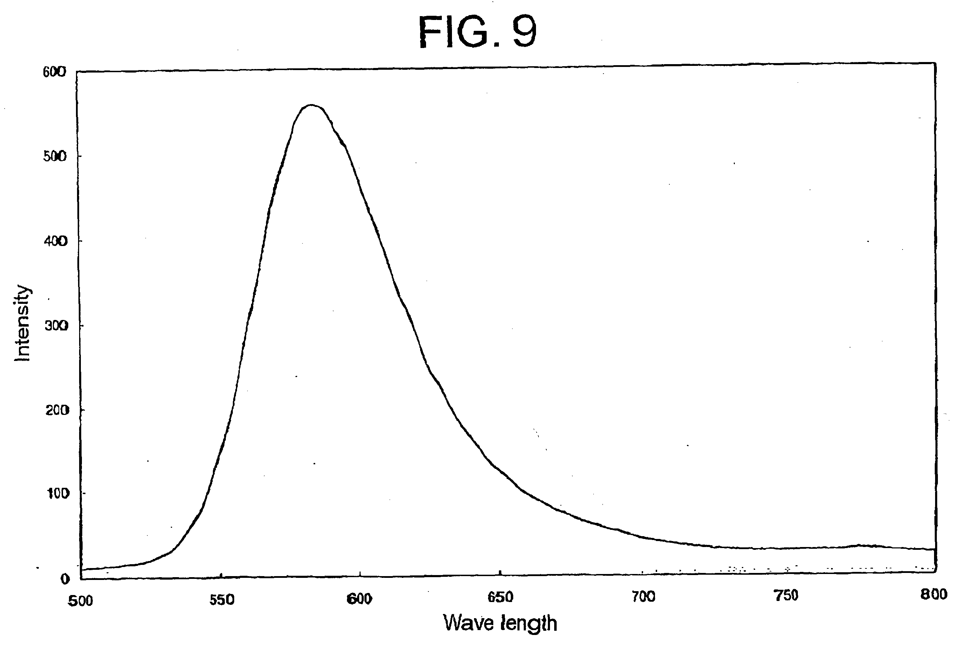

Fig. 9 is a fluorescence spectrum of coated particles (core material: ZnS:Mn$^{2+}$ phosphor, coat material: Y$_2$O$_3$ dielectric material) which was prepared from core particles of ZnS:Mn$^{2+}$ phosphor and yttrium nitrate (for the formation of the metal compound coat). The peak of the illustrated spectrum indicates that the coated particles comprise ZnS: Mn$^{2+}$ phosphor.

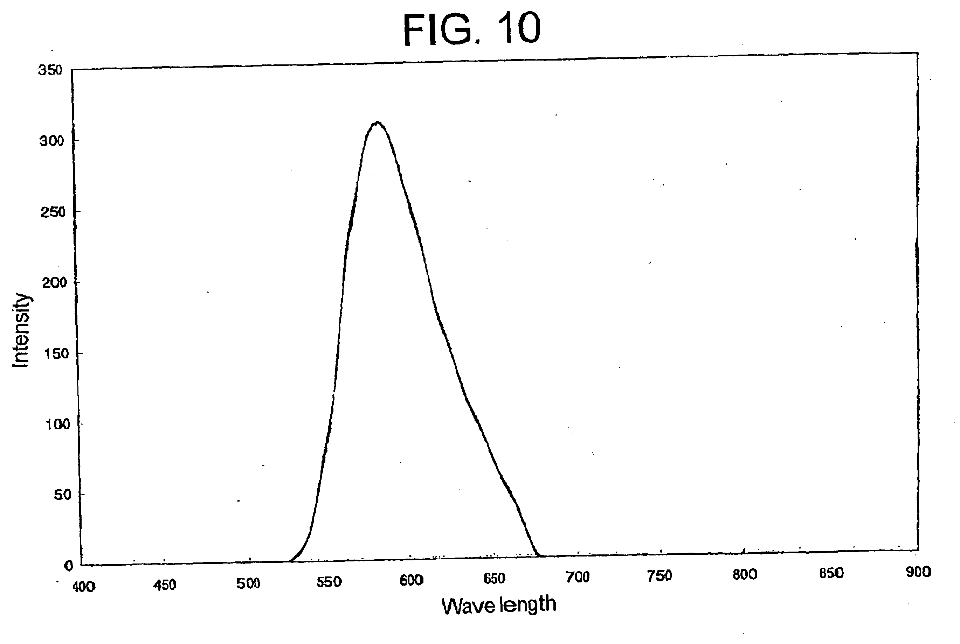

Fig. 10 is a fluorescence spectrum of coated particles which was prepared from core particles of ZnS, yttrium nitrate, and a dopant of manganese acetate. From comparison the spectrum of Fig. 10 with the spectrum of Fig. 9, it is apparent that the dopant (Mn$^{2+}$) was incorporated into the core material.

Table 1 indicates combinations of material of the core particles and materials of the metal compound coat employable in the method of the invention as well as employable in the known sol-gel method.

Table 1

| (1) Method of the invention | | | |
|---|---|---|---|
| | Coating material | | |
| Core particle material | Oxide | Nitride | Sulfide |
| Covalent bonded oxide | Yes | Yes | Yes |
| Nitride | Yes | Yes | Yes |
| Sulfide | Yes | No | Yes |
| Halide | Yes | No | - |
| Ferroelectric oxide | Yes | No | - |
| (2) Sol-gel method | | | |
| | Coating material | | |
| Core particle material | Oxide | Sulfide | Halide |
| Covalent bonded oxide | Yes | Yes | Yes |
| Nitride | Yes | Yes | Yes |
| Sulfide | Yes | Yes | - |
| Halide | Yes | - | - |
| Ferroelectric oxide | Yes | - | - |

In Table 1, the covalent bonded oxide means an oxide or a complex oxide in which a metal ion is relatively small and the chemical bonding between metal and oxygen is relatively short. Examples are Al$_2$O$_3$, SiO$_2$, MgO, Y$_2$O$_3$, their combinations, and combinations of B$_2$O$_3$ with these oxides.

The ferroelectric oxide means an oxide or a complex oxide having a high dielectric constant in which a metal ion is sufficiently large. Examples are TiO$_2$, titanates (e.g., SrTiO$_3$, BaTiO$_3$, PbTiO$_3$), tantalum oxide, tantalates (e.g., BaTa$_2$O$_6$), niobium oxide, and niobates (e.g., PbNb$_2$O$_6$). The metal compound set forth in Table 1 can contain a dopant, if desired.

In the coated inorganic particle prepared by the invention, the coating layer can serve as a layer for protecting the core particle. Otherwise, the coating layer can be formed of a phosphor material, a dielectric material, or an electroconductive material so that the coating layer can impart a performance of phosphor, dielectric material, or electroconductive material to the coated particle. The core particle also can be formed of a phosphor material, a dielectric material, or an electroconductive material so that the coating layer can impart a performance of phosphor, dielectric material, or electroconductive material to the coated particle.

Accordingly, the coating method of the invention is favorably employable for preparing a coated inorganic particle in which one of the core inorganic particle and the coated layer is made of a phosphor material and another is made of a dielectric material or an electroconductive material. Thus coated inorganic particle containing a phosphor material is favorably employed for manufacturing a dispersion type electroluminescence (EL) display element, a field emission display (FED) element, and a plasma display panel (PDP) which utilize phosphor particles. In these utilizations, the characteristics of the coating layer on the particles are important. The coating method of the present invention is advantageous because the method enables to prepare coated particles having a thick coat with a high density.

Examples of the constitutions of the coated particles are described below for various utilizations.

(1) Phosphor particles for EL device
　　Core material: phosphor [e.g., $ZnS:Mn^{2+}$, $CaS:Eu^{2+}$, $SrS:Ce^{3+}$, $BaAl_2S_4:Eu^{2+}$, $GaN:Er^{3+}$, $AlN:Tm^{3+}$]
　　Coating material: dielectric oxide [e.g., $Y_2O_3$, $Al_2O_3$]
(2) Phosphor particles for FED device
　　Core material: phosphor [e.g., $Y_2O_3:Eu^{3+}$]
　　Coating material: electroconductive oxide [e.g., $SnO_2$, $In_2O_3$]
(3) Phosphor particles for PDP device
　　Core material: phosphor [e.g., $BaMgAl_{10}O_{17}:Mn^{2+}$]
　　Coating material : covalent bonded oxide [e.g., $Y_2O_3$, $Al_2O_3$]
　　In FED device and PDP device of the above-mentioned combination, the coating layer should be very thin.
(4) Phosphor particles for EL device
　　Core material: dielectric oxide [e.g. , $BaTiO_3$, $SrTiO_3$, $TiO_2$]
　　Coating material: phosphor [e.g., $Y_2O_3:Mn^{2+}$, $ZnO:Zn$, $Ga_2O_3:Mn^{2+}$, $ZnGa_2O_4:Mn^{2+}$, $CaO:Eu^{2+}$, $ZnO: Zn^{2+}$, $Y_2SiO_5:Ce^{3+}$, $CaGa_2O_4:Mn^{2+}$]
(5) Phosphor particles for FED device
　　Core material: electroconductive oxide [e.g., $SnO_2$, $In_2O_3$]
　　Coating material: phosphor [e.g., $Y_2O_3:Eu^{3+}$]
　　The use of a transparent electroconductive particle enables to keep the particle from electrification without lowering luminance
(6) Phosphor particles for PDP device
　　Core material: covalent bonded oxide [e.g., $Al_2O_3$, $Y_2O_3$, $AlN$, $YAG$, $ALON$]
　　Coating material : phosphor [e.g., $BaMgAl_{14}O_{24}:Eu^{2+}$, $BaMgAl_{14}O_{24}:Eu^{2+},Mn^{2+}$, $CeMgAl_{11}O_{19}:Tb^{3+}$, $BaAl_{12}O_{19}:Mn^{2+}$, $YBO_3:Eu^{3+}$]
(7) Phosphor particles for EL device
　　Core material: dielectric oxide [e.g., $BaTiO_3$, $SrTiO_3$, $TiO_2$]
　　First coating material (inner side): phosphor [e . g . , $Y_2O_3:Mn^{2+}$, $Ga_2O_3:Mn^{2+}$, $ZnGa_2O_4:Mn^{2+}$, $CaO:Eu^{2+}$, $ZnO:Zn^{2+}$, $CaGa_2O_4:Mn^{2+}$]
　　Second coating material (outer side): dielectric oxide [e.g., $BaTiO_3$, $SrTiO_3$, $TiO_2$]
(8) Phosphor particles for EL device
　　Core material: dielectric oxide [e.g. , $Y_2O_3$, $Al_2O_3$, $YAG$, $ALON$, $Si_3N_4$, $SIALON$]
　　First coating material: phosphor [e.g., $GaN:Eu^{2+}$, $AlN:Tm^{3+}$]
　　Second coating material: dielectric oxide [e.g., $BaTiO_3$, $SrTiO_3$, $TiO_2$, $Ta_2O_5$, $Y_2O_3$, $Al_2O_3$, $YAG$, $ALON$]
(9) Phosphor particles for EL device
　　Core material: dielectric oxide [e.g., $Y_2O_3$, $Al_2O_3$, $YAG$, $ALON$, $Si_3N_4$, $SIALON$]
　　First coating material: phosphor [e.g., $Y_2O_3:Mn^{2+}$, $Ga_2O_3:Mn^{2+}$, $ZnGa_2O_4:Mn^{2+}$, $CaO:Eu^{2+}$, $ZnO:Zn^{2+}$, $CaGa_2O_4:Mn^{2+}$]
　　Second coating material: dielectric oxide (e.g., $BaTiO_3$, $SrTiO_3$, $TiO_2$, $Ta_2O_5$, $Y_2O_3$, $Al_2O_3$, $YAG$, $ALON$]

[Example 1 - single layer-coated particles]

In a separable flask were placed urea (1.8 M), yttrium nitrate (0.004 M), and powdery zinc sulfide (0.046 M). The resulting mixture was heated to 150°C under stirring so as to melt urea. There was obtained a uniform molten liquid in which the powdery zinc sulfide was dispersed. Subsequently, the molten liquid is heated to 450°C at a temperature elevation rate of 1°C/min., to solidify the molten liquid. The resulting solid product (foamed solid product) was pulverized and then fired at 900-1, 000°C under reductive atmosphere ($N_2/H_2$), to give coated particles (core material: ZnS, coating material: $Y_2O_3$).

[Example 2 - phosphor particles for EL device]

In a separable flask were placed urea (1.8 M), yttrium nitrate (0.004 M), manganese acetate (0.002 M), and powdery zinc sulfide (0.046 M). The resulting mixture was heated to 150°C under stirring so as to melt urea. There was obtained a uniform molten liquid in which the powdery zinc sulfide was dispersed. Subsequently, the molten liquid is heated to 450°C at a temperature elevation rate of 1°C/min., to solidify the molten liquid. The resulting solid product (foamed solid product) was pulverized and then fired at 900-1,000°C under reductive atmosphere ($N_2/H_2$), to give coated particles (core material: $ZnS:Mn^{2+}$, coating material: $Y_2O_3$).

[Example 3 - phosphor particles for EL device]

In a molten urea in which yttrium nitrate was dissolved was dispersed a powdery manganese-activated zinc sulfide phosphor. The molten urea composition was heated to decompose a portion of urea and a portion of yttrium nitrate, to solidify the molten urea composition. Thus, there was obtained a coated-particle precursor.
The coated-particle precursor was fired under reductive atmosphere to remove the remaining organic material, to obtain coated-particles (core material: $ZnS:MN^{2+}$, coating material: $Y_2O_3$).
Separately, the above-mentioned procedures were repeated using $CaS:Eu^{2+}$, $SrS:Ce^{3+}$, $BaAl_2S_4:Eu^{2+}$, GaN: $Er^{3+}$, or $AlN:Tm^{3+}$ as core material and $Y(NO_3)_3$ or $Al(NO_3)_3$ as metal nitrate, to obtain coated-particles corresponding to the aforementioned (1) phosphor particles for EL device.

[Example 4 - phosphor particles for EL device]

In a molten urea in which yttrium nitrate and manganese nitrate were dissolved was dispersed a powdery zinc sulfide phosphor. The molten urea composition was heated to decompose a portion of urea, to solidify the molten urea composition. Thus, there was obtained a coated-particle precursor.
The coated-particle precursor was fired under reductive atmosphere to remove the remaining organic material, to obtain coated-particles (core material: $ZnS:Mn^{2+}$, coating material: $Y_2O_3$).
Separately, the above-mentioned procedures were repeated using $GaN:Er^{3+}$ or $AlN:Tm^{3+}$ as core material and $Y(NO_3)_3$ or $Al(NO_3)_3$ as metal nitrate, to obtain coated-particles corresponding to the aforementioned (1) phosphor particles for EL device.

[Example 5 - double coated phosphor particles for EL device]

In a molten urea in which yttrium nitrate and manganese nitrate were dissolved was dispersed a powdery barium titanate. The molten urea composition was heated to decompose a portion of the composition, to solidify the molten urea composition. Thus, there was obtained a coated-particle precursor.
The coated-particle precursor was fired under oxidative atmosphere to remove the remaining organic material, to obtain phosphor-coated particles.
Separately, barium acetate, titanium tetraisopropoxide, acetic acid, acetylacetone, ethanol, and water were mixed under stirring to prepare a sol. In the sol were dispersed the above-mentioned phosphor-coated particles. The sol composition was dehydrated to give a gel which was then dried to give a dry gel. The dry gel was decomposed by heating to give double-coated particles (core material: $BaTiO_3$, first coating material: $Y_2O_3:Mn^{2+}$, second coating material: $BaTiO_3$).
The above-mentioned procedures were repeated using $BaTiO_3$, $SrTiO_3$, or $TiO_2$ as core material and $Y(NO_3)_3$, $Zn(NO_3)_2$, $Ga(NO_3)_3$, $Ca(NO_3)_2$, $Eu(NO_3)_3$, $Ce(NO_3)_3$, and/or $Mn(CH_3COO)_2$ as metal salt, to obtain single layer-coated particles, and further the sol-gel procedures were repeated using $Ba(CH_3COO)_2$, $Sr(CH_3COO)_2$, and/or $Ti((CH_3)_2CHO)_4$ as metal salt, to give double layer-coated particles corresponding to the aforementioned (7) phosphor particles for EL device.

[Example 6 - double coated phosphor particles for EL device]

In a molten urea in which gallium nitrate and erbium nitrate were dissolved was dispersed a powdery yttrium oxide. The molten urea composition was heated to decompose a portion of the composition, to solidify the molten urea composition. Thus, there was obtained a coated-particle precursor.
The coated-particle precursor was fired under reductive atmosphere ($N_2/H_2$ or $NH_3$ gas) to remove the remaining organic material, to obtain phosphor-coated particles.
Separately, barium acetate, titanium tetraisopropoxide, acetic acid, acetylacetone, ethanol, and water were mixed under stirring to prepare a sol. In the sol were dispersed the above-mentioned phosphor-coated particles. The sol composition was dehydrated to give a gel which was then dried to give a dry gel. The dry gel was decomposed by heating to give double-coated particles (core material: $Y_2O_3$, first coating material: $GaN:Er^{3+}$, second coating material: $BaTiO_3$).

The above-mentioned procedures were repeated using $Y_2O_3$, $Al_2O_3$, YAG, ALON, $Si_3N_4$, or SIALON as core material and $Ga(NO_3)_3$, $Al(NO_3)_3$, $Er(NO_3)_3$, and/or $Tm(NO_3)_3$ as metal salt, to obtain single layer-coated particles, and further the sol-gel procedures were repeated using Ba $(CH_3COO)_2$, Sr $(CH_3COO)_2$, $Ti((CH_3)_2CHO)_4$, $Ta((CH_3)_2CHO)_5$, Y $((CH_3)_2CHO)_3$, and/or Al $((CH_3)_2CHO)_3$ as metal salt, to give double layer-coated particles corresponding to the aforementioned (8) phosphor particles for EL device.

[Example 7 - double coated phosphor particles for EL device]

In a molten urea in which yttrium nitrate and manganese nitrate were dissolved was dispersed a powdery yttrium oxide. The molten urea composition was heated to decompose a portion of the composition, to solidify the molten urea composition. Thus, there was obtained a coated-particle precursor.

The coated-particle precursor was fired under neutral atmosphere to remove the remaining organic material, to obtain phosphor-coated particles.

Separately, barium acetate, titanium tetraisopropoxide, acetic acid, acetylacetone, ethanol, and water were mixed under stirring to prepare a sol. In the sol were dispersed the above-mentioned phosphor-coated particles. The sol composition was dehydrated to give a gel which was then dried to give a dry gel. The dry gel was decomposed by heating to give double-coated particles (core material: $Y_2O_3$, first coating material: $Y_2O_3:Mn^{2+}$; second coating material: $BaTiO_3$).

The above-mentioned procedures were repeated using $Y_2O_3$, $Al_2O_3$, YAG, ALON, $Si_3N_4$, or SIALON as core material and Y $(NO_3)_3$, $Zn(NO_3)_2$, $Ga(NO_3)_3$, $Ca(NO_3)_2$, $Eu(NO_3)_3$, and/or $Mn(CH_3COO)_2$ as metal salt, to obtain single layer-coated particles, and further the sol-gel procedures were repeated using $Ba(CH_3COO)_2$, $Sr(CH_3COO)_2$, $Ti((CH_3)_2CHO)_4$, Ta $((CH_3)_2CHO)_5$, $Y((CH_3)_2CHO)_3$, and/or Al $((CH_3)_2CHO)_3$ as metal salt, to give double layer-coated particles corresponding to the aforementioned (9) phosphor particles for EL device.

[Example 8 - phosphor particles for FED device]

In a flask were mixed under stirring urea (1.5 M), yttrium nitrate (0.10 M), and europium nitrate. In the resulting mixture was dispersed a powdery tin oxide (10 g). The resulting mixture was heated to 220°C under stirring so as to melt urea. There was obtained a uniform molten liquid in which the powdery tin oxide was dispersed. Subsequently, the molten liquid is heated to 450°C, to solidify the molten liquid. The resulting solid product (foamed solid product) was pulverized carefully and then fired at 1,000-1,500°C under reductive atmosphere ($N_2$ gas or $N_2/H_2$), to give coated particles (core material: $SnO_2$, coating material: $Y_2O:Eu^{3+}$).

Separately, the same procedures were repeated except for using $In_2O_3$ as core material, to give coated particles corresponding to the aforementioned (9) phosphor particles for FED device.

[Example 9 - phosphor particles for PDP device]

In a flask were mixed under stirring urea (1.5 M) , aluminum nitrate (0.0056 M), magnesium nitrate (0.004 M), barium acetate (0.002 M) and europium nitrate. In the resulting mixture was dispersed a powdery aluminum oxide (10 g). The resulting mixture was heated to 220°C under stirring so as to melt urea. There was obtained a uniform molten liquid in which the powdery aluminum oxide was dispersed. Subsequently, the molten liquid is heated to 450°C, to solidify the molten liquid. The resulting solid product (foamed solid product) was pulverized carefully and then fired at 1,000°C under atmospheric condition. Thus fired product was further fired at 1,000-1,300°C under $N_2/H_2$ gas atmosphere, to give coated particles (core material: $Al_2O_3$, coating material: $BaMg_2Al_{14}O_{24}:Eu^{2+}$).

separately, the same procedures were repeated except for using $Al_2O_3$, $Y_2O_3$, AlN, ALON or YAG as core material and using Al $(NO_3)_3$, Mg $(NO_3)_2$, Ba $(CH_3COO)_2$, $Eu(NO_3)_3$, and/or $Mn(NO_3)_2$ as metal salt, to give coated particles corresponding to the aforementioned (6) phosphor particles for PDP device.

[Example 10 - phosphor particles for PDP device]

In a flask were mixed under stirring urea (1.5 M) , aluminum nitrate (0.044 M), magnesium nitrate (0.004 M), cerium acetate (0.004 M) and terbium nitrate. In the resulting mixture was dispersed a powdery aluminum oxide (10 g). The resulting mixture was heated to 220°C under stirring so as to melt urea. There was obtained a uniform molten liquid in which the powdery aluminum oxide was dispersed. Subsequently, the molten liquid is heated to 450°C, to solidify the molten liquid. The resulting solid product (foamed solid product) was pulverized carefully and then fired at 1,000-1,300°C under $N_2/H_2$ gas atmosphere, to give coated particles (core material: $Al_2O_3$, coating material: $CeMgAl_{11}O_{19}:Tb^{3+}$).

Separately, the same procedures were repeated except for using $Y_2O_3$, AlN, ALON or YAG as core material, to give coated particles corresponding to the aforementioned (6) phosphor particles for PDP device.

[Example 11 - phosphor particles for PDP device]

In a flask were mixed under stirring urea (1.5 M), aluminum nitrate (0.048 M), barium acetate (0.004 M) and manganese nitrate. In the resulting mixture was dispersed a powdery aluminum oxide (10 g) . The resulting mixture was heated to 220°C under stirring so as to melt urea- There was obtained a uniform molten liquid in which the powdery aluminum oxide was dispersed. Subsequently, the molten liquid is heated to 450°C, to solidify the molten liquid. The resulting solid product (foamed solid product) was pulverized carefully and then fired at 1,000°C under atmospheric condition. Thus fired product was further fired at 1,000-1,300°C under $N_2/H_2$ gas atmosphere, to give coated particles (core material: $Al_2O_3$, coating material: $BaAl_{12}O_{19}:Mn^{2+}$).

Separately, the same procedures were repeated except for using $Y_2O_3$, AlN, ALON or YAG as core material, to give coated particles corresponding to the aforementioned (6) phosphor particles for PDP device.

[Example 12 - phosphor particles for PDP device]

In a flask were mixed under stirring urea (1.5 M), yttrium nitrate (0.02 M), boric acid (0.002 M) and europium nitrate. In the resulting mixture was dispersed a powdery aluminum oxide (10 g). The resulting mixture was heated to 220°C under stirring so as to melt urea. There was obtained a uniform molten liquid in which the powdery aluminum oxide was dispersed. Subsequently, the molten liquid is heated to 450°C, to solidify the molten liquid. The resulting solid product (foamed solid product) was pulverized carefully and then fired at 1,000°C under atmospheric condition. Thus fired product was further fired at 1,000-1,300°C under $N_2/H_2$ gas atmosphere, to give coated particles (core material: $Al_2O_3$, coating material: $YBO_3:Eu^{3+}$).

Separately, the same procedures were repeated except for using $Y_2O_3$, AlN, ALON or YAG as core material, to give coated particles corresponding to the aforementioned (6) phosphor particles for PDP device.

[Example 13 - single layer-coated particles]

In a molten composition of urea, zinc nitrate and saccharose was dispersed powdery yttrium oxide. The resulting molten dispersion was heated to decompose a portion of the molten composition, resulting in a solid product (i.e., coated particle precursor). The solid product was then fired under oxidative atmosphere to remove decomposed organic material, to give uniformly coated particles (core material: $Y_2O_3$, coating material: ZnO).

Separately, the same procedures were repeated except for using $Y_2O_3$, $Al_2O_3$, YAG, ALON, $Si_3N_4$, or SIALON as core material and using $Y(NO_3)_3$, $Zn(NO_3)_3$, or $Al(NO_3)_3$ as metal salt, to give coated particles having the following constitution.

   Core material: $Y_2O_3$, $Al_2O_3$, YAG, ALON, $Si_3N_4$, SIALON
   Coating material: $Y_2O_3$, ZnO, $Al_2O_3$

Separately, the same procedures were repeated except for using BN, GaN, or AlN as core material and using Al $(NO_3)_3$, Y $(NO_3)_3$, Ga $(NO_3)_3$, In$(NO_3)_3$, or $H_3BO_3$ as metal salt, to give coated particles having the following constitution.

   Core material: BN, GaN, AlN
   Coating material: BN, GaN, AlN, InN, ALON, YALON

[Example 14 - protecting layer-coated particles]

In a molten composition of urea and boric acid was dispersed powdery graphite. The resulting molten dispersion was heated to decompose a portion of the molten composition, resulting in a solid product (i.e., coated particle precursor). The solid product was then fired under $N_2$ gas or $NH_3$ gas atmosphere to remove decomposed organic material, to give coated particles (core material: graphite, coating material: BN). The coating layer served as a protecting layer.

Separately, the same procedures were repeated except for using oxidation-accelerating material such as $MoS_2$ or $WS_2$ as core material, using a material which is not converted into carbide upon contact with carbon under heating such as $Al(NO_3)_3$, $Y(NO_3)_3$, or $Zn(NO_3)_3$, as metal nitrate, and optionally using saccharose, to give coated particles having the following constitution.

Core material: $MoS_2$, $WS_2$, etc.
Coating material: $Al_2O_3$, $Y_2O_3$, ZnO, etc.

[Example 15 - phosphor particles for EL device, according to the second method]

Urea (108.8 g) and yttrium nitrate (3.12 g) were mixed and heated to 450°C, to give a solid product (i.e., metal compound precursor). The metal compound precursor was cooled, and pulverized in a mortar. To the pulverized metal compound precursor was added manganese-activated zinc sulfide phosphor particles (ZnS:Mn$^{2+}$, median diameter: 2 μm, 20 g). The resulting mixture was well mixed in a ball mill for 6 hours, to give a uniform mixture. The uniform mixture was placed in a quartz glass boat and heated at 1, 030°C for 2 hours under vacuum. There were obtained coated particles (core material: ZnS:Mn$^{2+}$, coating material: $Y_2O_3$) emitting fluorescence and electroluminescence with high emission strength.

As described above, the coated particles prepared by the present invention are favorably employable as phosphor particles to be included in electroluminescence (EL) devices. Particularly, the coated particles prepared by the invention are favorably employable as phosphor particles to be included in the following dispersion electroluminescence (EL) devices which are disclosed in PCT/JP02/03226.

(I) A dispersion electroluminescence device comprising a back face sheet, a light-transmitting back electrode, a light-emitting layer comprising electroluminescence light-emitting particles dispersed in a dielectric material phase, a light-transmitting front electrode, and a light-transmitting front protecting film arranged in order, wherein the back face sheet shows a light-scattering reflective property and the light-emitting layer shows a light-scattering property.

(II) A dispersion electroluminescence device comprising a back face sheet, a back electrode, a light-emitting layer comprising electroluminescence light-emitting particles dispersed in a dielectric material phase, a light-transmitting front electrode, and a light-transmitting front protecting film arranged in order, wherein the electroluminescence light-emitting particle comprises a dielectric material particle coated with a phosphor layer which is further coated with an outer coat layer.

(III) A dispersion electroluminescence device comprising a back face sheet, a back electrode, a light-scattering or non light-scattering, light-emitting layer which comprises electroluminescence light-emitting particles dispersed in a dielectric material phase, a light-transmitting front electrode, and a light-transmitting front protecting film arranged in order, wherein the electroluminescence light-emitting particle comprises a dielectric material particle coated with a phosphor layer.

(IV) A dispersion electroluminescence device comprising a back face sheet, a light-transmitting back electrode, a light-emitting layer comprising electroluminescence light-emitting particles dispersed in a dielectric material phase, a light-transmitting front electrode, and a light-transmitting front protecting film arranged in order, wherein the back face sheet shows light reflection by a light-scattering effect, a light-scattering, high refraction layer which comprises as main component a material having a refractive index of 80% or higher based on a refractive index of the electroluminescence light-emitting layer is placed between the light-transmitting front electrode and the front protecting film, and a refractive index of material placed between the light-emitting layer and the light-scattering, high refraction layer is adjusted, whereby 40% or more of a light emitted by the electroluminescence light-emitting layer toward a front side enters the light-scattering, high refraction layer.

(V) A dispersion electroluminescence device comprising a back face sheet, a light-transmitting back electrode, an electroluminescence light-emitting layer comprising electroluminescence light-emitting particles dispersed in a dielectric material phase, a light-transmitting front electrode, and a light-transmitting front protecting film arranged in order, wherein the back face sheet is a light-scattering reflective, high refraction sheet which comprises as main component a material having a refractive index of 80% or higher, based on a refractive index of the electroluminescence light-emitting layer, and a refractive index of material placed between the light-emitting layer and the back face sheet is adjusted, whereby 40% or more of a light emitted by the electroluminescence light-emitting layer toward a back side enters the back face sheet.

(VI) A dispersion electroluminescence device comprising a back face sheet, a back electrode, a back insulating material layer, an electroluminescence light-emitting layer comprising electroluminescence light-emitting particles dispersed in a dielectric material phase, a light-transmitting front electrode, a light-transmitting front protecting film arranged in order, wherein the back insulating material layer is a light-scattering, high refraction, insulating material layer which comprises as main component a material having a refractive index of 80% or higher based on a refractive index of the electroluminescence light-emitting layer, and 40% or more of a light emitted by the electroluminescence light-emitting layer toward a back side enters the back insulating layer.

(VII) A dispersion electroluminescence device comprising a back face sheet, a light-transmitting back electrode, an electroluminescence light-emitting layer comprising electroluminescence light-emitting particles dispersed in a dielectric material phase, an front insulating material layer, a light-transmitting front electrode, and a light-transmitting front protecting film arranged in order, wherein the back face sheet shows light reflection by a light-scattering effect, the front insulating material layer is a light-scattering, high refraction, insulating material layer which comprises as main component a material having a refractive index of 80% or higher, based on a refractive index of the electroluminescence light-emitting layer, and 40% or more of a light emitted by the electroluminescence light-emitting layer toward a front side enters the front insulating material layer.

(VIII) A dispersion electroluminescence device comprising a back face sheet, a back electrode, a back insulating material layer, an electroluminescence light-emitting layer comprising electroluminescence light-emitting particles dispersed in a dielectric material phase, a light-transmitting front electrode, and a light-transmitring front protecting film arranged in order, wherein the back insulating material layer has a thickness of 10 µm or more and is a light-scattering, high refraction, insulating material layer having a diffuse reflectance of 50% or higher.

The preferred embodiments of the above-described electroluminescence devices are described below.

For the EL device of (I) above, the following embodiments are preferred.

(1) The electroluminescence particle is a phosphor particle coated with an coating layer (e.g., a dielectric material layer).

(2) The outer coating layer of the electroluminescence particle has a refractive index of 65% or higher based'on a refractive index of the phosphor particle of the light-emitting layer.

(3) The outer coating layer of the electroluminescence particle has a refractive index of 75% or higher based on a refractive index of the phosphor particle of the light-emitting layer.

(4) The dielectric material phase of the light-emitting layer has a refractive index of 65% or higher based on a refractive index of the phosphor particle.

(5) The dielectric material phase of the light-emitting layer has a refractive index of 75% or higher based on a refractive index of the phosphor particle.

(6) The light-transmitting front electrode is a light-transmitting electrode having a high refractive index.

(7) The particle size of the electroluminescence light-emitting particle is in the range of 30 nm to 5 µm.

(8) The dielectric material layer comprises inorganic or organic fine particles dispersed in an organic polymer.

(9) A relationship between the radius of the electroluminescence light-emitting particle and the thickness of the coating layer of the particle is as follows:

$$(r-d) /r \leq (n_2/n_1)\times 1.2$$

wherein r is a radius of the light-emitting particle, d is the thickness of the coating layer, $n_2$ is a refractive index of the dielectric material layer of the light-emitting layer, and $n_1$ is a refractive index of the phosphor layer of the light-emitting particle.

(10) The phosphor of the electroluminescence light-emitting particle is a phosphor emitting a blue light, and there is placed a phosphor layer (which converts the blue light into green light, red light, or white light) between the light-transmitting front electrode and the light-transmitting front protecting film.

(11) The phosphor of the electroluminescence light-emitting particle is a phosphor emitting a ultraviolet light, and there is placed a phosphor layer (which converts the ultraviolet light into blue light, green light, red light, or white light) between the light-transmitting front electrode and the light-transmitting front protecting film.

(12) The phosphor layer placed between the light-transmitting front electrode and the light-transmitting front protecting film is a light-scattering phosphor layer.

(13) The phosphor of the electroluminescence light-emitting particle is a phosphor emitting a blue light, a green light, an orange light, or a red light.

(14) The phosphor of the electroluminescence light-emitting particle is a phosphor emitting a white light.

(15) There are placed a color filter layer and/or an ND filter layer between the light-transmitting front electrode and the light-transmitting front protecting film.

For the EL device of (II) above, the following embodiments are preferred.

(1) The dielectric material phase comprises an organic polymer, or comprises inorganic or organic fine particles dispersed in an organic polymer.

(2) The light-emitting layer is a light-scattering layer.

(3) The back electrode is a light-transmitting electrode, and the back face sheet shows a light-scattering reflective property.

(4) The outer dielectric material layer of the electroluminescence light-emitting particle has a refractive index of 65% or higher based on a refractive index of the phosphor layer of the light-emitting particle.

(5) The outer dielectric material layer of the electroluminescence light-emitting particle has a refractive index of 75% or higher based on a refractive index of the phosphor layer of the light-emitting particle.

(6) The dielectric material phase of the light-emitting layer has a refractive index of 65% or higher based on a refractive index of the phosphor layer of the light-emitting particle.

(7) The dielectric material phase of the light-emitting layer has a refractive index of 75% or higher based on a refractive index of the phosphor layer of the light-emitting particle. In this case, the material of the dielectric material phase is not limited to an organic polymer and can be an inorganic material or an organic-inorganic complex material (including nano-composite material).

(8) The back electrode is a light-transmitting electrode, the back face sheet is a light-scattering, high refraction reflective sheet which comprises as main component a material having a refractive index of 80% or higher based on a refractive index of the phosphor layer of the electroluminescence light-emitting particle, and the refractive index of material placed between the electroluminescence light-emitting particles and the back face sheet is adjusted, whereby 40% or more of a light emitted by the electroluminescence light-emitting particles toward a back side enters the back face sheet.

(9) The back electrode is a light-transmitting electrode, the back face sheet shows a light-scattering reflective property, a light-scattering, high refraction layer comprising as main component a material having a refractive index of 80% or higher based on a refractive index of the phosphor layer of the electroluminescence light-emitting particle is placed between the front electrode and the front protecting film, and a refractive index of material placed between the electroluminescence light-emitting particles and the light-scattering, high refraction layer is adjusted, whereby 40% or more of a light emitted by the electroluminescence light-emitting particles toward a front side enters the light-scattering, high refraction layer.

(10) The particle size of the electroluminescence light-emitting particle is in the range of 30 nm to 5 μm.

(11) A relationship between the radius of the electroluminescence light-emitting particle and the thickness of the coating layer of the particle is as follows:

$$(r-d)/r \leq (n_2/n_1) \times 1.2$$

wherein r is a radius of the light-emitting particle, d is the thickness of the coating layer, $n_2$ is a refractive index of the dielectric material layer of the light-emitting layer, and $n_1$ is a refractive index of the phosphor layer of the light-emitting particle.

(12) The dielectric material particle inside of the electroluminescence light-emitting particle has a dielectric constant of three times or more the dielectric constant of the phosphor layer of the light-emitting particle.

(13) The phosphor layer of the electroluminescence light-emitting particle comprises a phosphor emitting a blue light, and there is placed a phosphor layer (which converts the blue light into green light, red light, or white light) between the light-transmitting front electrode and the light-transmitting front protecting film.

(14) The phosphor layer of the electroluminescence light-emitting particle comprises phosphor emitting a ultraviolet light, and there is placed a phosphor layer (which converts the ultraviolet light into blue light, green light, red light, or white light) between the light-transmitting front electrode and the light-transmitting front protecting film.

(15) The phosphor layer placed between the light-transmitting front electrode and the light-transmitting front protecting film is a light-scattering phosphor layer.

(16) The phosphor layer of the electroluminescence light-emitting particle comprises a phosphor emitting a blue light, a green light, an orange light, or a red light.

(17) The phosphor layer of the electroluminescence light-emitting particle comprises a phosphor emitting a white light.

For the EL device of (III) above, the following embodiments are preferred.

(1) The back electrode is a light-transmitting electrode, and the back face sheet shows a light-scattering reflective property.

(2) The dielectric material phase of the light-emitting layer has a refractive index of 65% or higher based on a refractive index of the phosphor layer of the light-emitting particle.

(3) The dielectric material particle inside of the electroluminescence light-emitting particle has a dielectric constant of three times or more the dielectric constant of the phosphor layer of the light-emitting particle.

(4) The back electrode is a light-transmitting electrode, the back face sheet is a light-scattering reflective, high refraction sheet which comprises as main component a material having a refractive index of 80% or higher based on a refractive index of the phosphor layer of the electroluminescence light-emitting particle, and the refractive index of material placed between the light-emitting particles and the back face sheet is adjusted, whereby 40% or more of a light emitted by the electroluminescence light-emitting particles toward a back side enters the back face sheet.

(5) A refractive index of material placed between the light-emitting particles and the back face sheet is adjusted, whereby 70% or more of a light emitted by the electroluminescence light-emitting particles toward a back side enters the back face sheet.

(6) Any of materials placed between the electroluminescence light-emitting particles and the back face sheet have a refractive index of 80% or higher based on the refractive index of the phosphor layer of the light-emitting particle.

(7) The back electrode is a light-transmitting electrode, the back face sheet shows a light-scattering reflective property, a light-scattering, high refraction layer comprising as main component a material having a refractive index of 80% or higher based on a refractive index of the phosphor layer of the electroluminescence light-emitting particle is placed between the front electrode and the front protecting film, and a refractive index of material placed between the electroluminescence light-emitting particles and the light-scattering, high refraction layer is adjusted, whereby 40% or more of a light emitted by the electroluminescence light-emitting particles toward a front side enters the light-scattering, high refraction layer.

(8) A refractive index of material placed between the electroluminescence light-emitting particles and the light-scattering, high refraction layer is adjusted, whereby 70% or more of a light emitted by the electroluminescence light-emitting particles toward a front side enters the light-scattering, high refraction layer.

(9) Any of layers and materials placed between the phosphor layer of the electroluminescence light-emitting particles and the light-scattering, high refraction layer have a refractive index of 80% or more based on the refractive index of the light-emitting layer.

(10) Any of layers and materials placed between the phosphor layer of the electroluminescence light-emitting particles and the light-scattering, high refraction layer have a refractive index of 95% or more of the refractive index of the light-emitting layer.

(11) The phosphor layer of the electroluminescence light-emitting particle comprises a phosphor emitting a blue light, and there is placed a phosphor layer (which converts the blue light into green light, red light, or white light) between the light-transmitting front electrode and the light-transmitting front protecting film.

(12) The phosphor layer of the electroluminescence light-emitting particle comprises a phosphor emitting a ultraviolet light, and there is placed a phosphor layer (which converts the ultraviolet light into blue light, green light, red light, or white light) between the light-transmitting front electrode and the light-transmitting front protecting film.

(13) The phosphor layer placed between the front light-transmitting electrode and the light-transmitting front protecting film is a light-scattering phosphor layer.

(14) The phosphor layer of the electroluminescence light-emitting particle comprises a phosphor emitting a blue light, a green light, an orange light, or a red light.

(15) The phosphor layer of the electroluminescence light-emitting particle comprises a phosphor emitting a white light.

(16) The light-scattering, high refraction back face sheet comprises a ceramic material.

(17) The light-scattering, high refraction back face sheet is a composite of a glass sheet and a light-scattering, high refraction layer.

(18) There are placed a color filter layer and/or an ND filter layer between the light-transmitting front electrode and the light-transmitting front protecting film.

For the EL device of (IV) above, the following embodiments are preferred.

(1) An insulating material layer is placed between the electroluminescence light-emitting layer and the light-transmitting front electrode and/or the light-transmitting back electrode.

(2) The light-scattering, high refraction layer comprises as main component a material having a refractive index of 95% or higher, based on a refractive index of the electroluminescence light-emitting layer, and a refractive index of material placed between the light-emitting layer and the light-scattering, high refraction layer is adjusted, whereby 70% or more of a light emitted by the light-emitting layer toward a front side enters the light-scattering, high refraction layer.

(3) The light-scattering, high refraction layer comprises as main component a material having a refractive index of 99% or higher, based on a refractive index of the electroluminescence light-emitting layer, and a refractive index of material placed between the light-emitting layer and the light-scattering, high refraction layer is adjusted, whereby 85% or more of a light emitted by the light-emitting layer toward a front side enters the light-scattering, high refraction layer.

(4) The non light-transmitting back face sheet showing light reflection by a light-scattering effect comprises a ceramic material.

(5) The non light-transmitting back face sheet showing light reflection by a light-scattering effect is a composite of a glass sheet and a light-scattering high refraction layer.

(6) The electroluminescence light-emitting layer comprises a phosphor emitting a visible light.

(7) The electroluminescence light-emitting layer comprises two or more phosphor layers having different color hues from each other which are placed in areas separated from each other.

(8) There are placed a color filter layer and/or an ND filter layer between the light-scattering, high refraction layer and the light-transmitting protecting film.

(9) The electroluminescence light-emitting layer comprises a phosphor emitting a ultraviolet light, and a phosphor layer which absorbs the ultraviolet light and emits a visible light is placed on the front side of the light-scattering, high refraction layer.

(10) The electroluminescence light-emitting layer comprises a phosphor emitting a ultra-violet light, and the light-scattering, high refraction layer is a light-scattering, high refraction layer which absorbs the ultra-violet light and emits a visible light.

(11) The electroluminescence light-emitting layer comprises a phosphor emitting a blue light, and there is placed a phosphor layer (which converts the blue light into green light, red light, or white light) on the front side of the light-scattering, high refraction layer.

(12) The electroluminescence light-emitting layer comprises a phosphor emitting a blue light, and the light-scattering, high refraction layer is a light-scattering, high refraction phosphor layer which absorbs the blue light and emits green light, red light, or white light

For the EL devices of (V) to (VII) above, the following embodiments are preferred.

(1) An insulating material layer is placed between the electroluminescence light-emitting layer and the light-transmitting front electrode and/or the light-transmitting back electrode.

(2) A light-scattering, high refraction layer which comprises as main component a material having a refractive index of 80% or higher based on a refractive index of the electroluminescence light-emitting layer is further placed between the light-transmitting front electrode and the front protecting film, and the refractive index of material placed between the light-emitting layer and the light-scattering, high refraction layer is adjusted, whereby 40% or more of a light emitted by the electroluminescence light-emitting layer toward a front side enters the light-scattering, high refraction layer.

(3) The light-scattering, high refraction layer comprises as main component a material having a refractive index of 95% or higher, based on a refractive index of the electroluminescence light-emitting layer, and the refractive index of material placed between the light-emitting layer and the light-scattering, high refraction layer is adjusted, whereby 70% or more of a light emitted by the light-emitting layer toward a front side enters the light-scattering, high refraction layer.

(4) The light-scattering, high refraction layer comprises as main component a material having a refractive index of 99% or higher, based on a refractive index of the electroluminescence light-emitting layer, and the refractive index of material placed between the light-emitting layer and the light-scattering, high refraction layer is adjusted, whereby 85% or more of a light emitted by the light-emitting layer toward a front side enters the light-scattering, high refraction layer.

(5) The back face sheet is a light-scattering reflective, high refraction sheet which comprises as main component a material having a refractive index of 95% or higher based on a refractive index of the electroluminescence light-emitting layer, and the refractive index of material placed between the light-emitting layer and the back face sheet is adjusted, whereby 70% or more of a light emitted by the electroluminescence light-emitting particles toward a back side enters the back face sheet.

(6) The back face sheet is a light-scattering reflective, high refraction sheet which comprises as main component a material having a refractive index of 99% or higher based on a refractive index of the electroluminescence light-emitting layer, and the refractive index of any material placed between the light-emitting layer and the back face sheet is adjusted, whereby 85% or more of a light emitted by the electroluminescence light-emitting particles toward a back side enters the back face sheet.

(7) The back face sheet comprises ceramic material.

(8) The back face sheet is a composite of a glass sheet and a light-scattering, high refraction layer.

(9) The electroluminescence light-emitting layer comprises a phosphor emitting a visible light.

(10) The electroluminescence light-emitting layer comprises two or more phosphor layers having different color hues from each other which are placed in areas separated from each other.

(11) There are placed a color filter layer and/or an ND filter layer between the light-transmitting front electrode and the light-transmitting protecting film.

(12) The electroluminescence light-emitting layer comprises a phosphor emitting a ultra-violet light, and a phosphor layer absorbing the ultra-violet light and emitting a visible light is placed on the back side of the light-transmitting protecting film.

(13) The electroluminescence light-emitting layer comprises a phosphor emitting a ultra-violet light, and a light-scattering phosphor layer absorbing the ultra-violet light and emitting a visible light is placed on the back side of the light-transmitting protecting film.

(14) The electroluminescence light-emitting layer comprises a phosphor emitting a blue light, and a phosphor layer absorbing the blue light and emitting a green light, a red light or a white light is placed on the back side of the light-transmitting protecting film.

(15) The electroluminescence light-emitting layer comprises a phosphor emitting a blue light, and a light-scattering phosphor layer absorbing the blue light and emitting a green light, a red light, or a white light is placed on the back side of the light-transmitting protecting film.

(16) The electroluminescence light-emitting layer is a thin film phosphor layer, or a phosphor particle-dispersed layer comprising phosphor particles dispersed in a dielectric material layer having a refractive index of 80% or higher based on the refractive index of the phosphor particle.

For the EL device of (VIII) above, the following embodiments are preferred.

(1) The diffuse reflectance of the back insulating material layer is 70% or higher.
(2) The diffuse reflectance of the back insulating material layer is 90% or higher.
(3) The thickness of the back insulating material layer is in the range of 10 to 100 μm.
(4) The electroluminescence light-emitting layer comprises a phosphor emitting a visible light.
(5) The electroluminescence light-emitting layer comprises two or more phosphor layers having different color hues from each other which are placed in areas separated from each other.
(6) There are placed a color filter layer and/or an ND filter layer between the light-transmitting front electrode and the light-transmitting protecting film.
(7) The electroluminescence light-emitting layer comprises a phosphor emitting a ultra-violet light, and a phosphor layer absorbing the ultra-violet light and emitting a visible light is placed on the back side of the light-transmitting protecting film.
(8) The electroluminescence light-emitting layer comprises a phosphor emitting a ultra-violet light, and a light-scattering phosphor layer absorbing the ultra-violet light and emitting a visible light is placed on the back side of the light-transmitting protecting film.
(9) The electroluminescence light-emitting layer comprises a phosphor emitting a blue light, and a phosphor layer absorbing the blue light and emitting a green light, a red light or a white light is placed on the back side of the light-transmitting protecting film.
(10) The electroluminescence light-emitting layer comprises a phosphor emitting a blue light, and a light-scattering phosphor layer absorbing the blue light and emitting a green light, a red light, or a white light is placed on the back side of the light-transmitting protecting film.

The constitutions of the above-mentioned electroluminescence devices are described below in more detail, by referring to the attached drawings which illustrate their representative constitutions.

In the present specification, the term of high refraction means that the refractive index is 80% or higher (preferably 95% or higher, more preferably 99% or higher) based on the refractive index of the dielectric material phase in the light-emitting layer. The material or layer having the high refractive index means a material or a layer is a material or a layer having such a high refractive index.

Fig. 11 shows a representative constitution of the dispersion EL device of (I) above. The EL device comprises a back light-transmitting electrode 32b, a light-emitting layer, a front light-transmitting electrode 32a, and a light-transmitting protecting film 37 (or a wavelength-converting phosphor layer, a color filter layer, or their combination) laid on an opaque back face substrate 31b showing light-scattering reflection. The light-emitting layer comprises phosphor particles 33 (particle size generally is in the range of 30 nm to 5 μm, preferably 50 nm to 2 μm) dispersed in a dielectric material phase 35, and shows a light-scattering property.

By applying an alternating voltage (several tens V to several hundreds V, frequency 30 Hz to 10 KHz, the waveform is optional but preferably is a sine wave) between the light-transmitting electrode 32a arranged on the front side (lower side in the figure) and the light-transmitting back electrode 32b, the light-emitting layer emits a light under electric field. The emitted light is extracted through the front protecting film 37. There may be provided various auxiliary layers between the layers of the EL device. Such modification can be applied to the EL devices of the constitutions described below.

Fig. 12 shows an alternative representative constitution of the dispersion EL device of (I) above. The EL device comprises a light-transmitting back electrode 32b, a light-emitting layer, a light-transmitting front electrode 32a, and a light-transmitting protecting film 37 (or a wavelength-converting phosphor layer, a color filter layer, or their combination) laid on an opaque back face substrate 31b showing light-scattering reflection. The light-emitting layer comprises complex phosphor particles composed of phosphor particles 33 (particle size generally is in the range of 30 nm to 5 μm, preferably 50 nm to 2 μm) coated with a coating layer 40 (layer thickness generally is in the range of 100 nm to several tens μm) dispersed in a dielectric material phase 35 (preferably comprising an inorganic material, or a complex material comprising inorganic fine particles placed in an organic material), and shows a light-scattering property.

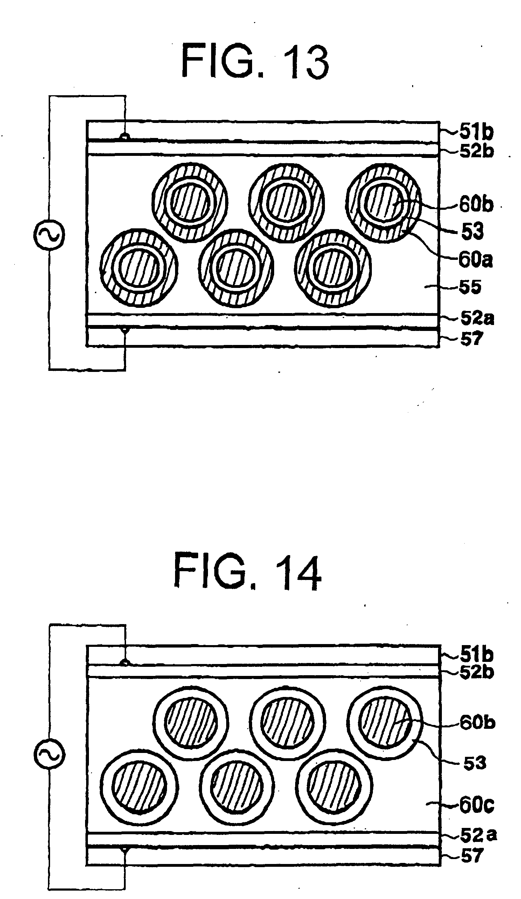

Fig. 13 shows a representative constitution of the dispersion EL device of (II) above. The EL device comprises a light-transmitting back electrode 52b, a light-emitting layer, a light-transmitting front electrode 52a, and a light-transmitting protecting film 57 laid on a back light-reflecting-layer (or light reflecting substrate) 51b. The light-emitting layer comprises complex phosphor particles composed of dielectric material cores (in the spherical form or in different form) 60b coated with a phosphor layer (thickness generally is in the range of 30 nm to 50 μm, preferably 50 nm to 2 μm) which is further coated with a coating layer 60a dispersed in a high dielectric constant-organic polymer phase 55, and shows a light-scattering property.

By applying an alternating current between the light-transmitting electrode 52a arranged on the front side (lower side in the figure) and the light-transmitting back electrode 52b, the light-emitting layer emits a light under electric field. The emitted light is extracted through the front protecting film 57.

The high dielectric constant-organic polymer employed in the above-described constitution can be a high dielectric constant-cyanoethylated cellulose resin (cyanoethylated cellulose, cyanoethylated hydroxycellulose, cyanoethylated pullulan, etc.), and may comprise high dielectric constant-super fine particles (diameter: several nm to several μm) of $BaTiO_3$, $SrTiO_3$, $TiO_2$, $Y_2O_3$ or the like dispersed in a polymer (having not so high dielectric constant) such as styrene resin, silicone resin, epoxy resin, or fluorinated vinylidene resin.

Fig. 14 shows a representative constitution of the dispersion EL device of (III) above. The EL device comprises a light-transmitting back electrode 52b having a high refractive index, a light-emitting layer, a light-transmitting front electrode 52a, and a light-transmitting protecting film 57 (or a wavelength-converting phosphor layer, a color filter layer, or their combination) laid on a light-reflective, high refraction back layer (which may serve a substrate) 51b. The light-emitting layer comprises complex phosphor particles composed of spherical dielectric material core 60b coated with a phosphor layer 53 (layer thickness generally is in the range of 30 nm to 5 μm, preferably 50 nm to 2 μm) dispersed in a high refraction, high dielectric constant medium phase 60c (preferably comprising an inorganic material, or a complex material comprising inorganic super-fine particles placed in an organic material).

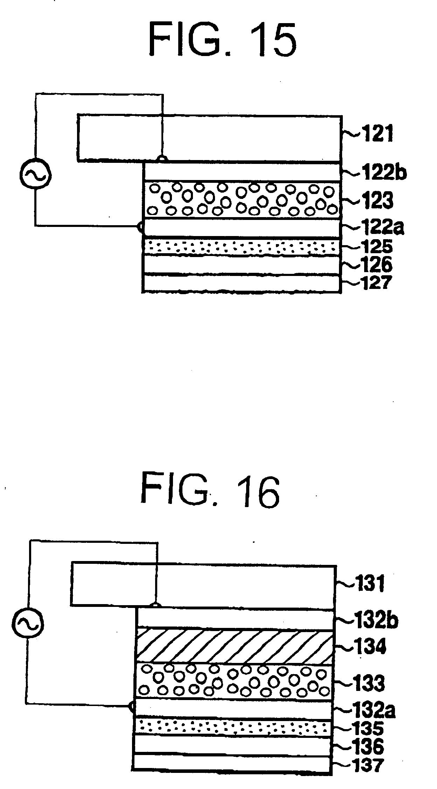

Fig. 15 shows a constitution of the dispersion EL device of (IV) above. The EL device of Fig. 15 comprises a light-transmitting back electrode (ITO, thickness: 0.01 - 20 μm) 122b, a light-emitting layer comprising phosphor particles dispersed and supported in a dielectric material phase (thickness: 2 - 50 μm, preferably 5 - 20 μm, different phosphors emitting lights of color hues of R, G and B are placed in divided areas) 123, a light-transmitting front high refraction electrode 122a, a light-scattering, high refraction layer (thickness 1 - 50 μm) 125, a color filter layer (R, G, B) 126, and a light-transmitting protecting layer 127 are arranged in order on (under, in Fig. 15) a high light-scattering reflective ceramic substrate (opaque back face sheet) 121 placed on the back side (side opposite to the side on which a light emitted in the device is extracted). In the EL device of Fig. 15, the layers other than the ceramic substrate 121 on the back side are essentially light-transmitting layers or opaque layers capable of transmitting a certain amount of light.

The opaque back face sheet 121 can comprise a glass sheet and an opaque layer laid on the glass sheet.

By applying an alternating voltage between the light-transmitting electrode 122a arranged on the front side (lower side in the figure) of the dispersion EL device of Fig. 15 and the back electrode 112b, the light-emitting layer 123 emits a light under electric field. The emitted light is extracted through the front protecting film 127.

Fig. 16 shows another constitution of the dispersion EL device of (IV) above. The EL device of Fig. 16 comprises a light-transmitting back electrode (ITO, thickness: 0.01 - 20 μm) 132b, a back insulating material layer (thickness: 0.3 - 100 μm) 134b, a light-emitting layer 133 comprising phosphor particles dispersed and supported in a dielectric material phase, a light-transmitting front electrode 132a, a light-scattering, high refraction layer (thickness 0.3 - 20 μm) 135, a color filter layer (R, G, B) 136, and a light-transmitting protecting layer 137 are arranged in order on a high light-scattering reflective ceramic substrate 131 placed on the back side. In the EL device of Fig. 16, the layers other than the ceramic substrate 131 on the back side are essentially light-transmitting layers or opaque layers capable of transmitting a certain amount of light.

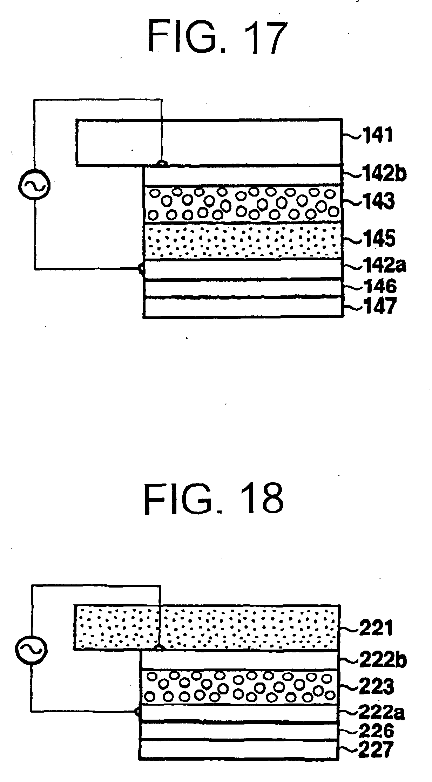

Fig. 17 shows a further constitution of the dispersion EL device of (IV) above. The EL device of Fig. 17 comprises a light-transmitting back electrode (ITO, thickness: 0.01 - 20 μm) 142b, a light-emitting layer 143 comprising phosphor particles dispersed and supported in a dielectric material phase, a light-scattering, high refraction, insulating material layer (thickness: 1 - 50 μm) 145, a light-transmitting high refraction front electrode (thickness 0.01 - 20 μm) 142a, a color filter layer (R, G, B) 146, and a light-transmitting protecting layer 157 are arranged in order on_a high light-scattering reflective ceramic substrate 141 placed on the back side. In the EL device of Fig. 17, the layers other than the ceramic substrate 141 on the back side are essentially light-transmitting layers or opaque layers capable of transmitting a certain amount of light.

Fig. 18 shows a constitution of the dispersion EL device of (V) above. The EL device of Fig. 18 comprises a light-transmitting back electrode having a high refractive index (ITO, thickness: 0.01 - 20 μm) 222b, a light-emitting layer comprising phosphor particles dispersed and supported in a dielectric material phase (thickness: 2 - 50 μm, preferably 5 - 20 μm, different phosphors emitting lights of color hues of R, G and B are placed in divided areas) 223, a light-transmitting front electrode 222a, a color filter layer (R, G, B) 226, and a light-transmitting protecting layer 227 are arranged in order on a high light-scattering reflective, high refraction ceramic substrate (light-scattering reflective back face sheet having a high refractive index) 221 placed on the back side (side opposite to the side on which a light emitted in the device is extracted). In the EL device of Fig. 18, the layers other than the high refraction ceramic substrate 221 on the back side are essentially light-transmitting layers or opaque layers capable of transmitting a certain amount of light.

The light-scattering reflective, high refraction back face sheet 221 can comprise a glass sheet and a light-scattering, high refraction layer laid on the glass sheet.

By applying an alternating voltage between the light-transmitting electrode 222a arranged on the front side (lower side in the figure) and the back electrode 212b, the light-emitting layer 223 emits a light under electric field. The emitted light is extracted through the front protecting film 227.

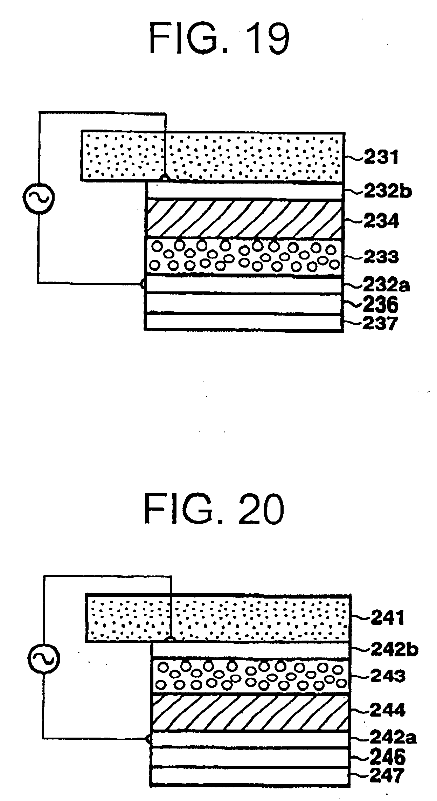

Fig. 19 shows a constitution of the dispersion EL device of (VI) above. The EL device of Fig. 19 comprises a light-transmitting, high refraction, back electrode (ITO, thickness: 0.01 - 20 μm) 232b, a high refraction, back insulating material layer (thickness: 0.3 - 50 μm) 234, a light-emitting layer 233 comprising phosphor particles dispersed and supported in a dielectric material phase, a light-transmitting front electrode 232a, a color filter layer (R, G, B) 236, and a light-transmitting protecting layer 237 are arranged in order on a high light-scattering reflective, high refraction ceramic substrate 231 placed on the back side. In the EL device of Fig. 19, the layers other than the high refraction ceramic substrate 231 on the back side are essentially light-transmitting layers or opaque layers capable of transmitting a certain amount of light.

Fig. 20 shows a constitution of the dispersion EL device of (VII) above. The EL device of Fig. 20 comprises a light-transmitting, high refraction, back electrode (ITO, thickness: 0.01 - 20 μm) 242b, a light-emitting layer 243 comprising phosphor particles dispersed and supported in a dielectric material phase, a high refraction, front insulating material layer (thickness: 0.3 - 1 μm) 244a, a light-transmitting, high refraction front electrode (thickness: 0.01 - 20 μm) 242a, a color filter layer (R, G, B) 246, and a light-transmitting protecting layer 247 are arranged in order on a high light-scattering reflective, high refraction ceramic substrate 241 placed on the back side. Also in the EL device of Fig. 20, the layers other than the ceramic substrate 241 on the back side are essentially light-transmitting layers or opaque layers capable of transmitting a certain amount of light.

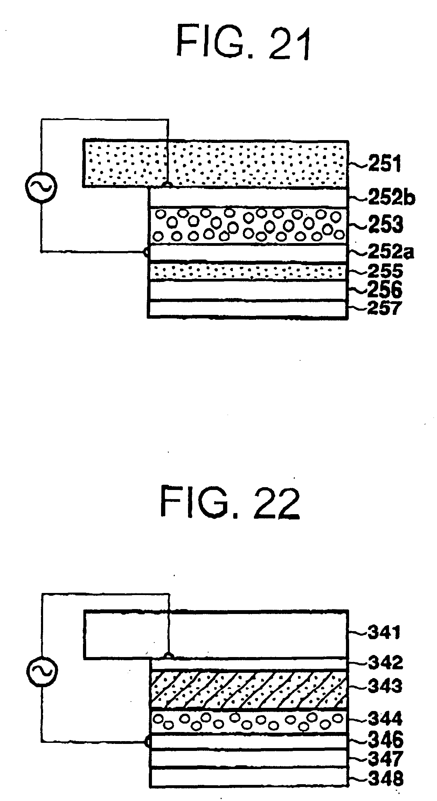

Fig. 21 shows another constitution of the dispersion EL device of (V) above. The EL device of Fig. 21 comprises a light-transmitting, high refraction back electrode (ITO, thickness: 0.01 - 20 μm) 252b, a light-emitting layer 253 comprising phosphor particles dispersed and supported in a dielectric material phase, a light-transmitting front electrode (thickness: 0.01 - 20 μm) 252a, a light-scattering, high refraction layer (thickness: 1 - 50 μm) 255, a color filter layer (R, G, B) 256, and a light-transmitting protecting layer 257 are arranged in order on a high light-scattering reflective, high refraction ceramic substrate 251 placed on the back side. Also in the EL device of Fig. 21, the layers other than the ceramic substrate 251 on the back side are essentially light-transmitting layers or opaque layers capable of transmitting a certain amount of light.

Fig. 22 shows another constitution of the dispersion EL device of (VIII) above. The EL device of Fig. 22 comprises a back electrode (metal electrode or non light-transmitting electrode) 342, a light-scattering reflective, high refraction, insulating material layer having a diffusion reflectance of 50% or more (thickness: 10 - 100 μm) 343, a light-emitting layer comprising phosphor particles dispersed and supported in a dielectric material phase (thickness: 2 - 50 μm, preferably 5 - 20 μm, different phosphors emitting lights of color hues of R, G and B are placed in divided areas) 344, a light-transmitting front electrode 346, a color filter layer (R, G, B) 347, and a light-transmitting protecting layer 348 are arranged in order on a transparent or opaque substrate 341 made of glass, metal or ceramic placed on the back side (side opposite to the side on which a light emitted in the device is extracted). In the EL device of Fig. 22, the layers other than the back substrate 341, the back electrode 342 and the light-scattering reflective, high refraction, insulating material layer 343 on the back side are essentially light-transmitting layers or opaque layers capable of transmitting a certain amount of light.

By applying an alternating voltage between the light-transmitting electrode 346 arranged on the front side (lower side in the figure) and the back electrode 342, the light-emitting layer 344 emits a light under electric field. The emitted light is extracted through the front protecting film 348.

Fig. 23 shows a constitution of a multi-color image-displaying dispersion EL device having a composite of plural light-emitting layers according to the invention. This EL device comprises a light-transmitting back electrode (ITO, thickness: 0.01 - 20 μm) 642a, a first light-emitting layer comprising phosphor particles dispersed and supported in a dielectric material phase (thickness: 2 - 50 μm, preferably 5 - 20 μm, a phosphor emitting a light of a color hue of R, G, or B is uniformly placed) 643, a high refraction, light-transmitting electrode 642b, a second light-emitting layer comprising phosphor particles dispersed and supported in a dielectric material phase (thickness: 2 - 50 μm, preferably 5 - 20 μm, a phosphor emitting a light of a color hue which differs from the color hue of the phosphor placed in the first light-emitting layer is uniformly placed) 644, a high refraction, front light-transmitting electrode 642c, an insulating material layer (thickness: 0.3 - 100 μm) 645, a high refraction, back light-transmitting electrode 642d, a third light-emitting layer comprising phosphor particles dispersed and supported in a dielectric material phase (thickness: 2 - 50 μm, preferably 5 - 20 μm, a phosphor emitting a light of a color hue which differs from the color hues of the phosphors placed in the first and second light-emitting layers are uniformly placed) 646, a high refraction, front light-transmitting electrode 642e, a light-scattering, high refraction layer (thickness: 1 - 50 μm) 647, and a light-transmitting protecting layer 648 are arranged in order on a ceramic substrate (opaque back face sheet) 641 showing a high light-scattering reflection placed on the back side (side opposite to the side on which a light emitted in the device is extracted). In the EL device of Fig. 23, the layers other than the back ceramic substrate 641 are essentially light-transmitting layers or opaque layers capable of transmitting a certain amount of light.

In the dispersion EL device of Fig. 23, the light-emitting layer 643 emits a light under electric field, by applying an alternating voltage between the light-transmitting electrode 642a and the light-transmitting electrode 642b. In the same way, the light-emitting layer 644 emits a light under electric field, by applying an alternating voltage between the light-transmitting electrode 642b and the light-transmitting electrode 642c, and the light-emitting layer 646 emits a light under electric field, by applying an alternating voltage between the light-transmitting electrode 642d and the light-transmitting electrode 642e. By applying the alternating voltage in an optional way, the desired light-emission is taken from the front protecting film 648 through the light-scattering, high refraction layer 647.

There may be provided an insulating material layer between each light-emitting layer (phosphor layer) and the light-transmitting electrode. The EL device can have various auxiliary layers such as a buffer layer between the provided layers. These variations can be adopted in the various EL devices described below.

The opaque back face sheet 641 can be composed of a glass sheet and an opaque layer provided on the glass sheet.

Fig. 24 shows another constitution of a multi-color image-displaying dispersion EL device having a composite of plural light-emitting layers according to the invention. This EL device comprises a light-transmitting back electrode (ITO, thickness: 0.01 - 20 μm) 652a, a first light-emitting layer comprising phosphor particles dispersed and supported in a dielectric material phase (thickness: 2 - 50 μm, preferably 5 - 20 μm, a phosphor emitting a light of a color hue of R, G, or B is uniformly placed) 653, a light-transmitting, high refraction electrode 652b, a second light-emitting layer comprising phosphor particles dispersed and supported in a dielectric material phase (thickness: 2 - 50 μm, preferably 5 - 20 μm, a phosphor emitting a light of a color hue which differs from the color hue of the phosphor placed in the first light-emitting layer is uniformly placed) 654, a light-transmitting, high refraction electrode 652c, an insulating material layer (thickness: 0.3 - 100 μm) 655, a light-transmitting, high refraction back electrode 652d, a third light-emitting layer comprising phosphor particles dispersed and supported in a dielectric material phase (thickness: 2 - 50 μm, preferably 5 - 20 μm, a phosphor emitting a light of a color hue which differs from the color hues of the phosphors placed in the first and second light-emitting layers is uniformly placed) 656, a light-transmitting, high refraction front electrode 652e, and a light-transmitting protecting layer 658 are arranged in order on a high refraction ceramic substrate (light-scattering reflective, high refraction sheet) 651 showing a high light-scattering reflection placed on the back side (under the back side in Fig. 24). Also in the EL device of Fig. 24, the layers other than the high refraction, back ceramic substrate 651 are essentially light-transmitting layers or opaque layers capable of transmitting a certain amount of light.

In the dispersion EL device of Fig. 24, the light-emitting layer 653 emits a light under electric field, by applying an alternating voltage between the light-transmitting electrode 652a and the light-transmitting electrode 652b. In the same way, the light-emitting layer 654 emits a light under electric field, by applying an alternating voltage between the light-transmitting electrode 652b and the light-transmitting electrode 652c, and the light-emitting layer 656 emits a light under electric field, by applying an alternating voltage between the light-transmitting electrode 652d and the light-transmitting electrode 652e. By applying the alternating voltage in an optional way, the desired light-emission is taken from the front protecting film 658. The light emitted toward the back side by each light-emitting layer is reflected with scattering by the light refraction back ceramic substrate 651 and a portion of the reflected light is taken from the front protecting film 658.

The light-scattering reflective, high refraction sheet 651 can be composed of a glass sheet and a light-scattering, high refraction layer having a high light-scattering reflection provided on the glass sheet.

Fig. 25 is a graph indicating a light extraction efficiency from parallel planes which explains the enhancement of a emission efficiency in the electroluminescence device of the invention. In more detail, a relationship between a refractive index ratio ($n_1/n_2$) and the extraction efficiency η in the case that a light is extracted in a layer having a refractive index $n_2$ from a light-emitting layer having a refractive index $n_1$ is expressed by the graph of Fig. 25. The extraction efficiency η decreases by 30%, 42%, and 55% in the case that the difference of refractive index is 5%, 10%, and 20%, respectively. The graph indicates the case, in consideration of a single surface of the light-emitting layer. In the case that a light advances both sides of the light-emitting layer and the light advancing on one side only is extracted, the extraction efficiency decreases to a half, unless no reflection on the opposite side is considered.

Materials and sizes of the substrate and various layers constituting the above-described electroluminescence devices are described below.

[Opaque substrate showing light-scattering reflection]

Representative examples of the opaque substrates showing light-scattering reflection are ceramic substrates. Examples of materials of the ceramic substrates include $Y_2O_3$, $Ta_2O_5$, $BaTa_2O_6$, $BaTiO_3$, $TiO_2$, $Sr(Zr,Ti)O_3$, $SrTiO_3$, $PbTiO_3$, $Al_2O_3$, $Si_3N_4$, ZnS, $ZrO_2$, $PbNbO_3$, and $Pb(Zr,Ti)O_3$. Alternatively, a transparent substrate such as glass sheet or a metal substrate coated with a light-scattering reflective layer can be employed. The light-scattering reflective layer can be prepared from the materials of the below-mentioned insulating material layer and the matrix components of the below-mentioned phosphors, provided that the materials and components have essentially no light absorption in the utilized wavelength region. The structure is prepared by forming areas (voids or particles having submicron level to several micron level) having different refractive indexes in the interior of the layer. The ceramic substrate can be prepared by heating a screen-printed material to form a sintered material.

[Glass substrate]

The representative examples are non-alkaline glass sheets (sheets of barium borosilicate glass and aluminosilicate glass).

[Light-scattering reflective layer]

The light-scattering reflective layer can be prepared from the materials of the below-mentioned insulating material layer and the matrix components of the below-mentioned phosphors, provided that the materials and components have essentially no light absorption in the utilized wavelength. The structure is prepared by forming areas (voids or particles having submicron level to several micron level) having different refractive indexes in the interior of the layer.

[Light-transmitting electrode]

There are mentioned ITO, ZnO:Al, complex oxides (described in JP-A-10-190028), GaN materials (described in JP-A-6-150723), $Zn_2 In_2O_5$, (Zn, Cd, Mg) O- (B,Al,Ga, In, Y) $_2O_3$-(Si, Ge, Sn, Pb, Ti, Zr) $O_2$, (Zn, Cd, Mg) O- (B, Al, Ba, In,Y)$_2O_3$-(Si, Sn, Pb) O, material comprising $MgO-In_2O_3$, and $SnO_2$ materials (described in JP-A-8-262225, JP-A-8-264022, and JP-A-8-264023).

[Phosphors in the light-emitting layer]

UV (UV light-emitting phosphor) : $ZnF_2$:Gd
B (blue light-emitting phosphor) : $BaAl_2S_4$:Eu, CaS:Pb, SrS : Ce, SrS:Cu, $CaGa_2S_4$:Ce
G (green light-emitting phosphor): (Zn,Mg)S:Mn, ZnS:Tb, F, $Ga_2O_3$:Mn
R (red light-emitting phosphor): (Zn,Mg) S:Mn, CaS : Eu, ZnS:Sm, F, $Ga_2O_3$:Cr

[Material for coating phosphor particle]

There can be mentioned $Y_2O_3$, $Ta_2O_5$, $BaTa_2O_6$, $BaTiO_3$, $TiO_2$, $Sr(Zr,Ti)O_3$, $SrTiO_3$, $PbTiO_3$, $Al_2O_3$, $Si_3N_4$, ZnS, $ZrO_2$, $PbNbO_3$, and $Pb(zr,Ti)O_3$. It is preferred that the material has a high dielectric constant and high resistance to dielectric breakdown, and forms an interfacial level on the phosphor particle surface to serve as an electron-supplying source. The material can be light-scattering material such as a sintered material, provided that the layer does not prominently decrease the dielectric constant of the layer.

[Material for insulating material layer and insulating material phase of light-emitting layer]

(1) A high dielectric constant organic polymer such as high dielectric constant cyanoethylated cellulose (e.g., cyanoethylated cellulose, cyanoethylated hydroxycellulose, and cyanoethylatated pullulan), or a dispersion of high electric constant fine particles (diameter: several nm to several μm) such as particles of $BaTiO_3$, $SrTiO_3$, $TiO_2$ or $Y_2O_3$ dispersed in a an organic polymer having a relatively low dielectric constant, such as styrene resin, silicone resin, epoxy resin, or fluorinated vinylidene resin.

(2) $Y_2O_3$, $Ta_2O_5$, $BaTa_2O_6$, $BaTiO_3$, $TiO_2$, $Sr(Zr,Ti)O_3$, $SrTiO_3$, $PbTiO_3$, $Al_2O_3$, $Si_3N_4$, ZnS, $ZrO_2$, $PbNbO_3$, and $Pb(Zr,Ti)O_3$. It is preferred that the material has a high dielectric constant and high resistance to dielectric breakdown. The light-scattering property can be given by employing a material which has a refractive index differing from the refractive index of the phosphor particle (or the dielectric material-coated phosphor particle), or forming areas (voids or particles having submicron level to several micron level) having different refractive indexes in the interior of the layer.

[Light-transmitting, high refraction electrode]

The materials described above as the material for the light-transmitting electrode can be employed under the condition that the materials have a refractive index equivalent to or higher than the refractive index of the dielectric material phase in the light-emitting layer.

[Light-scattering, high refraction layer]

The materials described above as the material for the light-scattering reflective layer can be employed under the condition that the materials have a refractive index equivalent to or higher than the refractive indexes of the light-emitting layer and intermediate layer(s).

[Insulating material layer]

There can be mentioned $Y_2O_3$, $Ta_2O_5$, $BaTa_2O_6$, $BaTiO_3$, $TiO_2$, $Sr(Zr,Ti)O_3$, $SrTiO_3$, $PbTiO_3$, $Al_2O_3$, $Si_3N_4$, ZnS, $ZrO_2$, $PbNbO_3$, and $Pb(Zr,Ti)O_3$. It is preferred that the material has a high dielectric constant and high resistance to dielectric breakdown. The material can be light-scattering material such as a sintered material, provided that the layer does not prominently decrease the dielectric constant of the layer.

[Buffer layer]

It is preferred that the material has a refractive index equivalent to or higher than the refractive indexes of the light-emitting layer and intermediate layer (s) .

[Front phosphor layer]

Blue light (B) -emitting phosphor:

Excitable by UV: $Sr_2P_2O_7$:Eu, $Sr_5 (PO_4)_3$Cl:EU, SrS : Ce, $SrGa_2S_4$:Ce, $CaGa_2S_4$:Ce

Green light(G)-emitting phosphor:

Excitable by UV: $BaMg_2Al_{16}O_{27}$:Eu,Mn, ZnS:Tb
Excitable by blue light: $Y_3Al_5O_{12}$:Ce

Red light(R)-emitting phosphor:

Excitable by UV: Y (PV) $O_4$, $YVO_4$:Eu, ZnS:Sm, (Ca, Sr) S:Eu
Excitable by blue light: (Ca,Sr)S:Eu

Light-scattering layer (W):

Excitable by blue light: Same as those for the production of the light-scattering reflective layer

[Color filter layers (R, B, G)]

a color face plate for CRT, a light-conversion element plate for duplication, a filter for mono-tube color television, a filter for flat liquid crystal panel display, a filter for color solid imaging device, those described in JP-A-8-20161

[Protecting film]

light-transmitting film having a thickness of 1 to 50 $\mu$m, which may be provided with such functions as antireflection, anti-staining property and anti-static property. Multi-layered protecting film can be employed.

**Claims**

1.    A method for coating inorganic particles with a metal compound comprising the steps of:

preparing a dispersion which comprises a metal salt and inorganic particles in a molten organic material which takes a solid form at 25°C, is converted into a polar liquid by heating, and decomposes by further heating; and
heating the dispersion, whereby coating the inorganic particles with a metal compound which is converted from the metal salt.

2.    The method of claim 1, wherein the organic material is urea or carbohydrazide.

3.    The method of claim 1, wherein the metal salt is selected from the group consisting of metal nitrates, metal sulfates, and metal acetates.

4.    The method of claim 1, wherein the inorganic particles have a mean particle size in the range of 10 nm to 100 $\mu$m.

5.    The method of claim 1, wherein the inorganic particles comprise an inorganic phosphor or an activated inorganic phosphor.

6.    The method of claim 1, wherein the inorganic particles comprises a dielectric material or an electroconductive material.

7.    The method of claim 1, wherein the metal compound is a phosphor or an activated phosphor.

8.    The method of claim 1, wherein the inorganic particles comprises an inorganic dielectric material or an inorganic dielectric material and the metal compound is a phosphor or an activated phosphor.

9.    The method of claim 1, wherein the inorganic particles comprise an dielectric material and are coated with a phosphor or an activated phosphor and the metal compound is a dielectric material.

10.    The method of claim 1, wherein the metal compound is selected from the group consisting of metal oxides, metal nitrides, metal oxynitrides, metal sulfides, and metal oxysulfides.

11.    The method of claim 1, wherein the dispersion contains a dopant.

12.    The method of claim 1, wherein the heating of the second step is performed at a temperature of 150 to 450°C.

13.    The method of claim 1, wherein the heating of the second step is performed at a temperature of 150 to 1, 500°C.

14.    The method of claim 1, wherein the heating of the second step is continued until the organic material decomposes.

15.    The method of claim 1, wherein the heating of the second step is continued until the organic material decomposes and further continued to a temperature of 700 to 1,500°C.

16. Coated inorganic particles prepared by the method of claim 1.

17. A method for coating inorganic particles with a metal compound comprising the steps of:

preparing a first mixture which comprises a metal salt and an organic material which takes a solid form at 25°C, is converted into a polar liquid by heating, and decomposes by further heating;

heating the first mixture to produce a precursor of the metal compound dispersed in a denatured organic material, the precursor being converted from the metal salt;

preparing a second mixture of the inorganic particles and the precursor dispersed in the denatured organic material;

and

heating the second mixture, whereby coating the inorganic particles with a metal compound which is converted from the precursor.

18. The method of claim 17, wherein the organic material is urea or carbohydrazide.

19. The method of claim 17, wherein the metal salt is selected from the group consisting of metal nitrates, metal sulfates, and metal acetates.

20. The method of claim 17, wherein the inorganic particles have a mean particle size in the range of 10 nm to 100 μm.

21. The method of claim 17, wherein the inorganic particles comprise an inorganic phosphor or an activated inorganic phosphor.

22. The method of claim 17, wherein the inorganic particles comprises a dielectric material or an electroconductive material.

23. The method of claim 17, wherein the metal compound is a phosphor or an activated phosphor.

24. The method of claim 17, wherein the inorganic particles comprises an inorganic dielectric material, and the metal compound is a phosphor or an activated phosphor.

25. The method of claim 17, wherein the inorganic particles comprise an dielectric material and are coated with a phosphor or an activated phosphor and the metal compound is a dielectric material.

26. The method of claim 17, wherein the metal compound is selected from the group consisting of metal oxides, metal nitrides, metal oxynitrides, metal sulfides, and metal oxysulfides.

27. The method of claim 17, wherein the first mixture contains a dopant.

28. The method of claim 17, wherein a dopant is incorporated into the second mixture.

29. The method of claim 17, wherein the heating of the second step is performed at a temperature of 150 to 450°C.

30. The method of claim 17, wherein the heating of the fourth step is performed at a temperature of 150 to 1,500°C.

31. The method of claim 17, wherein the heating of the fourth step is continued until the polymerized urea decomposes.

32. The method of claim 16, wherein the heating of the second step is continued until the polymerized urea decomposes and further continued to a temperature of 700 to 1,500°C.

33. Coated inorganic particles prepared by the method of claim 17.

# FIG. 1

# FIG. 2

# FIG. 3

# FIG. 4

# FIG. 5

# FIG. 6

# FIG. 7

# FIG. 8

# FIG. 9

# FIG. 10

EP 1 403 329 A1

# FIG. 11

# FIG. 12

# FIG. 13

51b
52b
60b
53
60a
55
52a
57

# FIG. 14

51b
52b
60b
53
60c
52a
57

# FIG. 15

~121
~122b
~123
~122a
~125
~126
~127

# FIG. 16

~131
~132b
~134
~133
~132a
~135
~136
~137

# FIG. 17

- ~141
- ~142b
- ~143
- ~145
- ~142a
- ~146
- ~147

# FIG. 18

- ~221
- ~222b
- ~223
- ~222a
- ~226
- ~227

# FIG. 19

231
232b
234
233
232a
236
237

# FIG. 20

241
242b
243
244
242a
246
247

# FIG. 21

~251
~252b
~253
~252a
~255
~256
~257

# FIG. 22

~341
~342
~343
~344
~346
~347
~348

# FIG. 23

641
642a
643
642b
644
642c
645
642d
646
642e
647
648

# FIG. 24

651
652a
653
652b
654
652c
655
652d
656
652e
658

# FIG. 25

## EUROPEAN SEARCH REPORT

Application Number

EP 03 02 1830

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | US 6 274 110 B1 (KIM YEUN SHIK ET AL) 14 August 2001 (2001-08-14) * column 3, line 18 - line 47 * --- | 1,17 | C09C3/06 C09C1/04 C09C1/02 C09C1/36 C09C1/40 C09C1/46 C09K11/02 |
| A | US 2001/042853 A1 (KODAS TOIVO T ET AL) 22 November 2001 (2001-11-22) * paragraphs [0076],[0150],[0192],[0233],[0298] * --- | 1,17 | |
| D,A | EP 1 215 261 A (SUMITOMO CHEMICAL CO) 19 June 2002 (2002-06-19) * the whole document * ----- | 1,17 | |

TECHNICAL FIELDS SEARCHED (Int.Cl.7)

C09C
C09K

The present search report has been drawn up for all claims

| Place of search | Date of completion of the search | Examiner |
|---|---|---|
| MUNICH | 17 December 2003 | Nobis, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 02 1830

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2003

| Patent document cited in search report | | Publication date | Patent family member(s) | | Publication date |
|---|---|---|---|---|---|
| US 6274110 | B1 | 14-08-2001 | KR | 9710305 B1 | 25-06-1997 |
| | | | JP | 10502043 T | 24-02-1998 |
| | | | WO | 9529379 A1 | 02-11-1995 |
| US 2001042853 | A1 | 22-11-2001 | US | 6180029 B1 | 30-01-2001 |
| | | | US | 6193908 B1 | 27-02-2001 |
| | | | US | 6197218 B1 | 06-03-2001 |
| | | | US | 6168731 B1 | 02-01-2001 |
| | | | US | 2001052589 A1 | 20-12-2001 |
| | | | US | 2003168635 A1 | 11-09-2003 |
| | | | AU | 6536398 A | 09-09-1998 |
| | | | AU | 6665598 A | 09-09-1998 |
| | | | EP | 0985007 A1 | 15-03-2000 |
| | | | JP | 2001513828 T | 04-09-2001 |
| | | | US | 6153123 A | 28-11-2000 |
| | | | WO | 9837166 A1 | 27-08-1998 |
| | | | WO | 9837165 A1 | 27-08-1998 |
| | | | US | 6210604 B1 | 03-04-2001 |
| | | | US | 6645398 B1 | 11-11-2003 |
| | | | AU | 6438398 A | 09-09-1998 |
| | | | AU | 6439098 A | 09-09-1998 |
| | | | EP | 1007308 A1 | 14-06-2000 |
| | | | JP | 2001513697 T | 04-09-2001 |
| | | | US | 6165247 A | 26-12-2000 |
| | | | US | 6277169 B1 | 21-08-2001 |
| | | | US | 6602439 B1 | 05-08-2003 |
| | | | US | 6316100 B1 | 13-11-2001 |
| | | | US | 6338809 B1 | 15-01-2002 |
| | | | WO | 9836887 A1 | 27-08-1998 |
| | | | US | 6660680 B1 | 09-12-2003 |
| | | | US | 6635348 B1 | 21-10-2003 |
| | | | US | 2002003225 A1 | 10-01-2002 |
| EP 1215261 | A | 19-06-2002 | JP | 2002180041 A | 26-06-2002 |
| | | | EP | 1215261 A2 | 19-06-2002 |
| | | | US | 2002093282 A1 | 18-07-2002 |

For more details about this annex : see Official Journal of the European Patent Office, No. 12/82